# EUROPÄISCHE PATENTSCHRIFT

(11) **EP 2 036 348 B1**
(45) Veröffentlichungstag und Bekanntmachung des Hinweises auf die Patenterteilung: **09.08.2017**
(21) Anmeldenummer: 07730224.8
(22) Anmeldetag: 18.06.2007
(51) Int. Cl.: H04N 7/173

(54) **VORRICHTUNG UND VERFAHREN ZUR VEREINHEITLICHTEN BEDIENUNG EINER VIELZAHL VON NUTZSIGNALQUELLEN**
APPARATUS AND METHOD FOR STANDARDIZED USE OF A MULTIPLICITY OF USEFUL SIGNAL SOURCES
DISPOSITIF ET PROCEDE POUR LA MANIPULATION UNIFIEE D'UNE PLURALITE DE SOURCES DE SIGNAUX UTILES

(30) Priorität: 21.06.2006 DE 102006028505
(43) Veröffentlichungstag der Anmeldung: 18.03.2009
(73) Patentinhaber: Nokia Solutions and Networks GmbH & Co. KG, 81541 Munich (DE)
(72) Erfinder: LÖBIG, Norbert, 64291 Darmstadt (DE); LÜKEN, Joachim, 80686 München (DE)
(74) Vertreter: Weidel, Gottfried
(86) Internationale Anmeldenummer: PCT/EP2007/056026
(87) Internationale Veröffentlichungsnummer: WO 2007/147805

(56) Entgegenhaltungen:
- EP-A- 1 558 029
- WO-A-00/55970
- WO-A-00/56064
- US-A1- 2002 144 265
- US-A1- 2003 120 742
- US-A1- 2004 117 846
- US-A1- 2005 216 570

## Beschreibung

Die vorliegende Erfindung bezieht sich auf eine Vorrichtung und ein Verfahren zur vereinheitlichten Bedienung einer Vielzahl von Nutzsignalquellen und insbesondere auf eine Vorrichtung und ein Verfahren zur vereinheitlichten Bedienung von verschiedenen Geräten innerhalb einer gemeinsamen Unterhaltungselektronik-Umgebung.

Aus der Druckschrift US 2005/0216570 A1 ist ein Audio/Video Netzwerksystem bekannt, welches eine Vielzahl von Quellenkomponenten aufweist, die jeweils ausgebildet sind zur Bereitstellung von Audio/Video Programmdaten. Das System umfasst eine Senkenkomponente, welche kommunikativ gekoppelt ist mit jeder der Quellenkomponenten. Die Senkenkomponente ist ausgebildet, einem Nutzer eine aggregierte Liste von den Audio/Video Programmdaten zu präsentieren, die von **jeder** Quellkomponente aus der Mehrzahl von Quellkomponenten verfügbar sind.

Aus der Druckschrift WO 00/56064 A ist ein Multimediasystem bekannt zur Präsentation von Multimediasegmenten, welches einen Manager für bedingten Zugriff aufweist als gemeinsame Schnittstelle zwischen dem Multimediasystem und einer Anzahl von Anbietern für bedingten Zugriff, selbst wenn die Anbieter für bedingten Zugriff abweichenden Schnittstellenstandards folgen.

Aus der Druckschrift EP 1 558 029 A sind ein System und ein Verfahren zur Ausgabe von zusammengeführten Mehrquelleninformationen in einem Televisionssystem bekannt. Ein Informationszusammenführungssystem umfasst einen Empfänger zum Empfang individueller Programmführerinformationslisten von zumindest zwei Quellen, und ein mit dem Empfänger gekoppelter Mikroprozessor führt die individuellen Programmführerinformationslisten zu einer konsolidierten Programmführerinformationsliste zusammen.

Mit der Verfügbarkeit von DSL (Digital Subscriber Line) oder direktem ETH (Ethernet)-Zugang zu leistungsfähigen Kommunikationsnetzen in Kombination mit attraktiven Flatrate-Tarifen der Internet-Serviceprovider gewinnt die Nutzung von Internet-Fernsehen bzw. sogenannten IP-TV wachsende Bedeutung. Der Fernsehzuschauer erhält damit zusätzlichen Zugriff auf Broadcast TV (BTV), Video on demand (VoD) und Internet (Walled Garden/Games) mittels paketvermittelnder Netzwerke. Zugangseinrichtungen für derartige weitere Angebote sind unter anderem eine lokal beim Fernsehzuschauer vorzuhaltende sogenannte "Set-Top-Box" (STB) mit einer für den jeweiligen Anbieter spezifischen Funktionalität, die das Zusammenwirken mit den jeweiligen zentralen Servern (TV Headend, VoD-Server, DHCP-Server, Digital Rights Management (DRM), zentrale Koordination inklusive Zugangs- und Feature Control sowie Bezahlsysteme) der jeweiligen Netzlösung ermöglicht.

In vielen Fällen hat der Fernsehzuschauer aber bereits einen Zugang zu weiteren Fernsehprogrammen über alternative Übertragungsmedien. Insbesondere können dies autark arbeitende Set-Top-Boxen für Satellitenempfang (DVB-S, Digital Video Broadcast Satellite), digitalen terrestrischen Empfang (DVB-T, Digital Video Broadcast Terrestric) oder digitalen Empfang über Kabel (DVB-C, Digital Video Broadcast Cable) sein. Vielfach sind entsprechende Funktionalitäten bereits in moderne Fernsehgeräte integriert. Auch mag es in selteneren Fällen sein, dass darüber hinaus noch analoger terrestrischer Empfang oder analoger Empfang via Satellit oder Kabel in Kombination benutzt wird.

In einer derartigen Unterhaltungselektronik-Umgebung besitzen ferner digitale (oder auch analoge) Aufnahme- und Wiedergabegeräte, die ebenfalls an einem Fernsehgerät lokal angeschlossen sein können, starke Verbreitung. Diese Geräte können ebenfalls eigene Empfänger für mindestens eine der vorstehend genannten Empfangstechniken vorhalten und als weitere Nutzsignalquellen für die Fernsehgeräte fungieren. Im Hinblick auf digitale Technik sind derartige Empfangs- und Wiedergabefunktionen oftmals bereits in die Set-Top-Box integriert bzw. stellen eine weitere Funktionalität der Set-Top-Box zur Verfügung.

Diese herkömmlichen Geräte besitzen im Allgemeinen eine eigene, üblicherweise auf Infrarotsignalen beruhende Fernbedienungs-Schnittstelle, wobei eine Bedienung der einzelnen Funktionen über separate oder eine einzige konfigurierbare gemeinsame Fernbedienung durchgeführt werden kann. Trotz einer derartigen gemeinsamen Fernbedienung bleibt die Beherrschung der beschriebenen Unterhaltungselektronik-Umgebung bzw. genannten Infrastruktur sehr unkomfortabel, da jedes der Geräte dem Bediener weiterhin als selbstständiges Gerät mit eigener Bedienphilosophie und eigenem Look-and-Feel gegenübersteht.

Der Erfindung liegt daher die Aufgabe zu Grunde eine Vorrichtung und ein Verfahren zur vereinheitlichten Bedienung einer Vielzahl von Nutzsignalquellen zu schaffen, die eine Erhöhung des Benutzerkomforts ermöglicht.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 11 gelöst.

Demzufolge ist eine Speichereinheit zum Speichern von Konfigurationsdaten für die Vielzahl von Nutzsignalquellen vorgesehen, wobei eine Funktionsmerkmals-Ermittlungseinheit in Abhängigkeit von den Konfigurationsdaten individuelle Funktionsmerkmale der Nutzsignalquellen ermittelt und diese ermittelten Funktionsmerkmale zum Erzeugen eines vereinheitlichten Funktionsmerkmals für die Gesamtheit der Nutzsignalquellen in einer Funktionsmerkmal-Aufbereitungseinheit aufbereitet. Auf diese Weise können bisher einzeln nebeneinander stehende Funktionsmerkmale zusammengeführt und vereinheitlicht ausgegeben werden, wodurch sich für den Benutzer eine Verbesserung des Komforts ergibt, da er immer nur die Funktionsmerkmale des Gesamtsystems angezeigt bekommt.

Die Funktionsmerkmale können hierbei entweder direkt von den Nutzsignalquellen oder von einem Funktionsmerkmalsspeicher in einem Netzwerk abgerufen werden. Insbesondere bei dem Netzabruf ergibt sich eine starke Vereinfachung beim Ermitteln der individuellen Funktionsmerkmale der jeweiligen Nutzsignalquellen. Ferner kann beim Erzeugen des vereinheitlichten Funktionsmerkmals eine Gewichtung der ermittelten Funktionsmerkmale durchgeführt werden, wodurch beispielsweise Qualitätsunterschiede der jeweiligen Nutzsignalquellen berücksichtigt und bei einer Mehrzahl von gleichen Funktionsmerkmalen ein Funktionsmerkmal mit der höchsten Qualität ausgewählt werden kann.

Die individuellen Funktionsmerkmale können hierbei beispielsweise elektronische Programmzeitschriften oder jeweilige Audio-/Video-Datenlisten für bereits aufgezeichnete Musik oder Filme darstellen, wobei das vereinheitlichte Funktionsmerkmal dann jeweils eine vereinheitlichte elektronische Programmzeitschrift oder eine vereinheitlichte Audio-/Video-Datenliste für das Gesamtsystem darstellt. Ferner kann in Abhängigkeit vom vereinheitlichten Funktionsmerkmal eine Ausgabeeinheit derart angesteuert werden, dass eine Bild-im-Bild-Funktionalität ermöglicht ist.

Weiterhin besteht die Möglichkeit zum Aufbau einer Verbindung zu einem Steuersignal-Generator in einem Netzwerk, wobei eine Steuerung der Nutzsignalquellen von diesem Steuersignal-Generator durch Steuersignale ermöglicht wird. Wenn derartige Steuersignale beispielsweise VPS-Signale darstellen, so kann auf diese Weise eine zeitgesteuerte Aufnahme-Funktionalität auch für Geräte im Gesamtsystem zur Verfügung gestellt werden, welche diese üblicherweise nicht aufweisen.

Hinsichtlich des Verfahrens werden nach dem Bereitstellen von Konfigurationsdaten für die Vielzahl von Nutzsignalquellen zunächst die individuellen Funktionsmerkmale der Nutzsignalquellen in Abhängigkeit von den Konfigurationsdaten ermittelt, um anschließend zum Erzeugen eines vereinheitlichten Funktionsmerkmals für die Gesamtheit der Nutzsignalquellen eine Aufbereitung der ermittelten Funktionsmerkmale durchzuführen.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
Figur 1 eine vereinfachte Blockdarstellung zur Veranschaulichung der erfindungsgemäßen Vorrichtung;
Figur 2 eine vereinfachte Blockdarstellung zur Veranschaulichung einer Vorrichtung zur vereinheitlichten Bedienung einer Vielzahl von Nutzsignalquellen gemäß einem ersten Ausführungsbeispiel;
Figur 3 eine vereinfachte Darstellung zur Veranschaulichung einer Vorrichtung zur vereinheitlichten Bedienung einer Vielzahl von Nutzsignalquellen gemäß einem zweiten Ausführungsbeispiel;
Figur 4 eine vereinfachte Blockdarstellung zur Veranschaulichung einer Vorrichtung zur vereinheitlichten Bedienung einer Vielzahl von Nutzsignalquellen gemäß einem dritten Ausführungsbeispiel;
Figur 5 eine vereinfachte Blockdarstellung zur Veranschaulichung einer Vorrichtung zur vereinheitlichten Bedienung einer Vielzahl von Nutzsignalquellen gemäß einem vierten Ausführungsbeispiel;
Figur 6 eine vereinfachte Blockdarstellung zur Veranschaulichung einer Vorrichtung zur vereinheitlichten Bedienung einer Vielzahl von Nutzsignalquellen gemäß einem fünften Ausführungsbeispiel;
Figur 7 eine vereinfachte Blockdarstellung zur Veranschaulichung einer Vorrichtung zur vereinheitlichten Bedienung einer Vielzahl von Nutzsignalquellen gemäß einem sechsten Ausführungsbeispiel;
Figuren 8A und 8B eine vereinfachte Blockdarstellung zur Veranschaulichung einer Aufbereitung und Auswahl von Funktionsmerkmalen;
Figur 9 eine vereinfachte Blockdarstellung zur Veranschaulichung einer Aufnahme-Programmierung;
Figur 10 eine vereinfachte Darstellung zur Veranschaulichung einer vereinheitlichten elektronischen Programmzeitschrift;
Figur 11 eine Darstellung zur Veranschaulichung einer vereinheitlichten Audio-/Video-Datenliste; und
Figur 12 ein Flussdiagramm zur Veranschaulichung wesentlicher Verfahrensschritte zur vereinheitlichten Bedienung einer Vielzahl von Nutzsignalquellen.

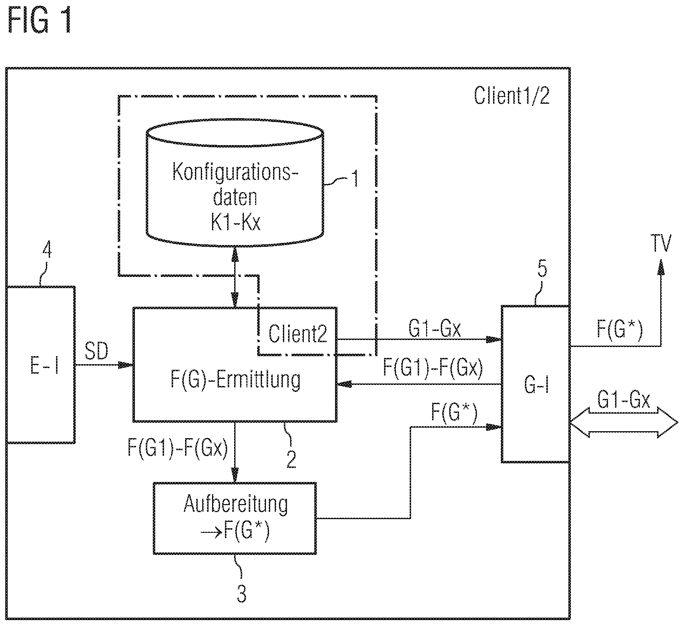

Figur 1 zeigt eine vereinfachte Blockdarstellung zur Veranschaulichung einer Vorrichtung zur vereinheitlichten Bedienung einer Vielzahl von Nutzsignalquellen G1 bis Gx. Die Nutzsignalquellen können hierbei die eingangs genannten Set-Top-Boxen zum Empfang von Broadcast TV (BTV) über ein paketvermittelndes Netzwerk oder aber herkömmliche Set-Top-Boxen zum Empfangen von Fernsehsignalen mittels Kabel, Satellit und/oder terrestrisch (DVB-S/T/C, Digital Video Broadcast Satellite/Terrestric/Cable) sein. Als Ausgabeeinheit kann insbesondere in einer Unterhaltungselektronik-Umgebung ein herkömmliches Fernsehgerät TV verwendet werden.

Das als Client 1/2 bezeichnete Gerät zur vereinheitlichten Bedienung dieser Vielzahl von Nutzsignalquellen weist gemäß Figur 1 eine Speichereinheit 1 auf, in der eine Vielzahl von Konfigurationsdaten Kl bis Kx für die Vielzahl von Nutzsignalquellen G1 bis Gx abgelegt sind. Diese Konfigurationsdaten können beispielsweise über eine Eingabe-Schnittstelle 4 manuell eingegeben oder automatisch eingelesen werden. Grundsätzlich ist auch eine Herstellerprogrammierung dieser Konfigurationsdaten Kl bis Kx denkbar, wobei jedoch üblicherweise die Konfigurationsdaten einer tatsächlich vom Benutzer genutzten Unterhaltungselektronik-Umgebung abgelegt werden sollte. Typische Konfigurationsdaten Kl bis Kx sind beispielsweise der Typ eines jeweiligen Gerätes, eine Information, ob es sich zum Beispiel um einen Rekorder oder einen Empfänger handelt, oder eine Hersteller-Identifikationsnummer. Weiterhin können hier Bedienprofile und sonstige Daten abgelegt sein, die die jeweiligen Nutzsignalquellen G1 bis Gx näher beschreiben. Die Konfigurationsdaten Kl bis Kx enthalten insbesondere die Verschaltung der Geräte der Unterhaltungselektronik-Umgebung. Diese Konfigurationsdatenanteile sind i.a. durch den Benutzer einzugeben bzw. bei Änderungen/Erweiterungen der Unterhaltungselektronik-Umgebung anzupassen.

Vorzugsweise befindet sich der Client 1/2 innerhalb einer Set-Top-Box und kann daher auch über eine darin befindliche Telekommunikations-Schnittstelle 5 an ein beispielsweise paketvermittelndes Netzwerk N angeschlossen werden. In diesem Fall können die Konfigurationsdaten K1 bis Kx auch über eine derartige lokale Schnittstelle innerhalb eines Home-Netzwerks bzw. über ein Home-Gateway eingegeben werden.

Gemäß Figur 1 ist ferner eine Funktionsmerkmal-Ermittlungseinheit 2 zum Ermitteln von individuellen Funktionsmerkmalen F(G1) bis F(Gx) der verschiednen Nutzsignalquellen G1 bis Gx in Abhängigkeit von den Konfigurationsdaten K1 bis Kx vorgesehen. Genauer gesagt kann diese Funktionsmerkmal-Ermittlungseinheit 2 beispielsweise einen Ansteuerteil Client 2 aufweisen, der die Nutzsignalquellen in Abhängigkeit von den beispielsweise manuell eingegebenen Konfigurationsdaten über die Telekommunikations-Schnittstelle 5 oder über eine (nicht dargestellte) Infrarot-Schnittstelle IR ansteuert und hierbei die individuellen Funktionsmerkmale F(G1) bis F(Gx) abruft.

Da jedoch insbesondere ältere Empfangsgeräte bzw. Nutzsignalquellen G1 bis Gx keine derartige Abrufmöglichkeit ihrer individuellen Funktionsmerkmale F(G1) bis F(Gx) erlauben, kann die Funktionsmerkmal-Ermittlungseinheit 2 vorzugsweise auch eine Verbindung zu einem nicht dargestellten Funktionsmerkmalsspeicher in einem beispielsweise paketvermittelnden Netzwerk N über die Telekommunikations-Schnittstelle 5 bzw. das Home-Network herstellen und hierbei die in einem Funktionsmerkmals-Server abgelegten Funktionsmerkmale unter Verweis auf die im Speicher 1 abgelegten Konfigurationsdaten wie beispielsweise einen Gerätetyp abrufen.

Die so von den Nutzsignalquellen direkt abgerufenen oder bei einem Server abgefragten individuellen Funktionsmerkmale F(G1) bis F(Gx) können dann zum Erzeugen eines vereinheitlichten Funktionsmerkmals F(G*) einer Funktionsmerkmal-Aufbereitungseinheit 3 zugeführt werden. Genauer gesagt werden in der Aufbereitungseinheit 3 die ermittelten individuellen Funktionsmerkmale zum Beispiel hinsichtlich ihrer Qualität gewichtet oder hinsichtlich ihres Informationsgehalts oder ihrer Erscheinungsform bearbeitet, und daraus wird ein vereinheitlichtes Funktionsmerkmal F(G*), welches für die Gesamtheit der Nutzsignalquellen G1 bis Gx gilt, generiert und an der Ausgabeeinheit TV ausgegeben.

Auf diese Weise erhält man eine vereinheitlichte und komfortable Bedienung sowie insbesondere eine vereinheitlichte Bedienerschnittstelle für die Vielzahl von Nutzsignalquellen, da deren bisher parallel nebeneinander vorliegende Funktionsmerkmale F(G1) bis F(Gx) nunmehr strukturiert und unter Anwendung intelligenter Bearbeitungsfunktionen zusammengeführt sind. Obwohl der in Figur 1 dargestellte Client 1/2 direkt in einer Set-Top-Box realisiert werden kann, ist vorzugsweise eine Aufteilung der verschiedenen Funktionalitäten in einen Client 1 und einen Client 2 wünschenswert, der gestrichelt dargestellt ist. Hierbei können sowohl die Konfigurationsdaten als auch ein Teil der Funktionsmerkmal-Ermittlungseinheit 2 in ein externes Gerät wie beispielsweise eine IR-Fernbedienung oder einen infrarottauglichen PDA (Personal Digital Assistant) ausgelagert werden, wobei die Nutzsignalquellen nunmehr über eine Infrarot-Schnittstelle des ausgelagerten Teils aus angesteuert werden. Bei einer derartigen Aufteilung der Vorrichtung zur vereinheitlichten Bedienung einer Vielzahl von Nutzsignalquellen erhält man eine besonders hohe Kompatibilität mit bereits existierenden Geräten innerhalb einer Unterhaltungselektronik-Umgebung, da alle derartigen Geräte üblicherweise eine Infrarot-Schnittstelle zum Ansteuern ihrer Funktionen aufweisen. Neben oder zusätzlich zur Infrarotschnittstelle zur Ansteuerung der Nutzdatenquellen kann auch jede andere Technologie zur Ansteuerung eingesetzt werden (z.B. Bluetooth, WLAN, ETH), sofern die Nutzdatenquellen und das Ausgabegerät TV dies erlauben. Erfolgt die vorstehend beschriebene Auslagerung nicht, so geschieht die Ansteuerung der Nutzsignalquellen über die Telekommunikationsschnittstelle bzw. das Home Network oder eine Schnittstelle zu einem Infrarotsender im Empfangsbereich der Nutzsignalquellen. Optional kann in diesem Falle auch eine spezielle weitere Übertragungsschnittstelle vorhanden sein (z.B. Bluetooth, WLAN) zum Zwecke der genannten Ansteuerung. Wie nachfolgend im Einzelnen erläutert werden soll, können unter den individuellen Funktionsmerkmalen beispielsweise jeweilige elektronische Programmzeitschriften F(G1) bis F(Gx) = EPG1 bis EPGx (Electronic Program Guide) verstanden werden, aus denen für das Gesamtsystem von Nutzsignalquellen G1 bis Gx eine vereinheitlichte elektronische Programmzeitschrift als vereinheitlichtes Funktionsmerkmal F(G*) erzeugt wird. In gleicher Weise können die individuellen Funktionsmerkmale F(G1) bis F(Gx) auch Listen von aufgezeichneten Audio-/VideoDaten darstellen, wobei das vereinheitlichte Funktionsmerkmal F(G*) dann eine für alle Nutzsignalquellen gültige vereinheitlichte Audio-/Video-Datenliste darstellt.

Sofern eine Ausgabeeinheit oder eine der Nutzsignalquellen beispielsweise eine Bild-im-Bild-Funktionalität aufweist, so kann in Abhängigkeit vom vereinheitlichten Funktionsmerkmal, d.h. von der beispielsweise neu erstellten elektronischen Programmzeitschrift oder der für das Gesamtsystem gültigen Audio-/Video-Datenliste eine Bild-im-Bild-Anzeige durchgeführt werden, wenn beispielsweise ein jeweiliges Auswahlfeld ausgewählt wird. Die zugehörigen Audio/Video Signale ergänzen dann die vorstehend genannten Funktionsmerkmale und werden ebenfalls per Ansteuerung durch den Client 1/2 abgerufen.

Im Hinblick auf die Ausgabe einer elektronischen Programmzeitschrift (EPG) erfolgt gemäß dem Stand der Technik die Live Ausgabe eines gewählten Programms i.a. parallel zur Ausgabe des EPG, z.B. als bewegtes Hintergrundbild mit den EPG Informationen im Vordergrund. Gemäß aktuellen, weitergehenden Forderungen wird ebenfalls die Live Ausgabe der im EPG angezeigten weiteren Programmkanäle als Bild-in-Bild Information im EPG von den Netzbetreibern und Dienstanbietern gewünscht. Zur Ausgabe eines inklusive dieser Live-Ausgaben vereinheitlichten Funktionsmerkmales EPG ist die Verarbeitung der jeweiligen Realzeitnutzsignale erforderlich. Dies kann dadurch erfolgen, dass das Ausgabegerät selbst oder die gemäß der erfindungsgemäßen Vorrichtung angelegte Nutzsignalquelle STB per geeigneter Verkabelung der Unterhaltungselektronik-Umgebung zur Aufnahme der Nutzsignale der weiteren Nutzsignalquellen bestimmt ist und ferner Mischfunktionen für diese Nutzsignale besitzt. Damit kann der einfache Fall der Parallel- oder Hintergrundausgabe eines ausgewählten Programmkanals über die Funktionen des Client 1/2 bewirkt werden bei gleichzeitiger Ausgabe des vereinheitlichten EPG.

Soll die genannte Bild-im-Bild Ausgabe der weiteren Kanäle des zur Anzeige gebrachten Teils des EPG erfolgen, so kann das ebenfalls über Client 1/2 gesteuert werden, sofern eine geeignete Mischfunktion für die Nutzdatensignale im TV-Gerät oder vorzugsweise in der erfindungsgemäßen Vorrichtung selbst zur Ansteuerung durch Client 1/2 vorhanden ist. Dies hat dann zur Folge, dass beispielsweise ein erster gewählter IPTV-Programmkanal als bewegtes Hintergrundbild des vereinheitlichten EPG als Live Information über das Ausgabegerät ausgegeben wird und zugleich seine Toninformation über das Ausgabegerät zur Verfügung steht und dass gleichzeitig mindestens ein im EPG angezeigter weiterer Programmkanal einer ggf. anderen Nutzsignalquelle, also z.B. eines Satelliten-Empfängers, eines Kabel-Empfängers oder eines terrestrischen Empfängers, ebenfalls live als bewegtes Bild-im-Bild ohne Tonsignal im vereinheitlichten EPG vorhanden ist. Je nach Anzahl der parallel nutzbaren Empfänger einer Nutzdatenquelle oder der Verfügbarkeit von Programmkanälen mit Parallelausgabe der Video-Information mehrerer Einzelprogramme (z.B. Mosaik-Ausgaben von mehreren Programmen mit angepasster Auflösung) kann hierbei von externen Nutzsignalquellen eine Vielzahl von Programmkanälen zugleich bereitgestellt werden und für den jeweils angezeigten Teil eines EPG als Bild-im-Bild Information in das EPG eingebracht werden. Steuerung dieser Funktion obliegt jeweils Client 1/2.

Darüber hinaus kann insbesondere zur Verbesserung einer Aufnahme-Funktionalität die Funktionsmerkmal-Ermittlungseinheit 2 auch eine Verbindung zu einem nicht dargestellten Steuersignal-Generator hergestellt werden, der sich beispielsweise in einem paketvermittelnden Netzwerk N befindet, wodurch eine Steuerung der Nutzsignalquellen durch von diesem Steuersignal-Generator abgesetzte Steuersignale ermöglicht wird. Bei einem derartigen Steuersignal-Generator handelt es sich beispielsweise um einen Server für die Verteilung eines Aufnahmestart- und Aufnahmeendesignals in funktionaler Analogie zu dem VPS Signal (Video Program System). Auf diese Weise kann auch für Aufzeichnungsgeräte in der Unterhaltungselektronik-Umgebung, welche eine derartige Unterstützung nicht realisieren, gleichwohl dieses Feature zum zeitgerechten Aufnahmestart und Aufnahmestopp verfügbar werden.

Gemäß der vorliegenden Erfindung kann daher eine Steuerung einer existierenden Unterhaltungselektronik-Umgebung gemäß den Erfordernissen von zum Beispiel einer einheitlichen elektronischen Programmzeitschrift (EPG, Electronic Program Guide) mit gleicher Funktionalität und einem einheitlichen Look-and-Feel inklusive Bild-im-Bild-Funktionalität realisiert werden. Die Bedienung von abhängigen Nutzsignalquellen kann über eine als Master agierende, mit den erfindungsgemäßen Merkmalen versehene Set-Top-Box unter Verwendung existierender Bedienschnittstellen realisiert werden. Darüber hinaus besteht eine flexible Konfigurierbarkeit der externen Einheiten und der Kanalabbildung zwischen externer, auf eine Nutzsignalquelle bezogener Kanalnummer und der dem Bediener ausgegebenen Kanalnummer der elektronischen Programmzeitschrift EPG entsprechend den Vorlieben eines Benutzers. Ferner kann eine automatische Anpassung des zur Bedienung erforderlichen Abbildungsverhaltens der externen und internen Kanäle nach den Erfordernissen von beispielsweise geänderten Sendefrequenzen erfolgen. Wird das gleiche TV-Signal, z.B. ein bestimmtes Programm, von mehreren Nutzsignalquellen zugleich angeboten, so kann über mitlaufend verfügbare Qualitätskriterien und/oder Auswertung einer zeitlichen Verzögerung des Nutzdatensignals eine mitlaufende Bewertung erfolgen und die dynamische Auswahl und Zuordnung der bestens geeigneten Nutzsignalquelle aus der Mehrzahl der Nutzsignalquellen unterschiedlichster Technologie durchgeführt werden.

Ferner ist auch eine Verlagerung eines Teils der Funktionalität von der Set-Top-Box in eine Fernbedienung bzw. einen PDA (Personal Digital Assistant) möglich, wobei vorzugsweise eine Infrarot-Sendefunktion der Fernbedienung bzw. des PDA zur Realisierung einer Kommunikation verwendet wird.

Somit kann eine Vielzahl von Internet/IPTV-Fernsehsendern bzw. Dienstanbietern innerhalb eines paketvermittelnden Netzwerks eventuell neben terrestrisch, via Sattelit oder Kabel empfangenen Programmen berücksichtigt werden. Ferner ist eine umfassende Integration von externen Aufzeichnungsgeräten hinsichtlich aller ihrer Grundfunktionen (Ad-hoc-Aufnahme, Pause, Resume, TV, Trick-play, Movie-Liste, zeitgesteuerte Aufnahme usw.) und Erweiterungsfunktionen (Aufnahmeprogrammierung aus der elektronischen Programmzeitschrift (EPG)) möglich.

Für bedienergestütztes Erlernen der vereinheitlichten Bedienung der externen Geräte kann ferner ein Teaching mode vorgesehen werden. Zur Vermeidung von Datenverlusten können die in der Speichereinheit abgelegten Konfigurationsdaten auf verschiedenste Weise gesichert und wieder zurückgespielt werden. Ferner ergeben sich neue Funktionsmerkmale durch die Nutzung von Geräten in der Unterhaltungselektronik-Umgebung, die bisher nicht oder nur sehr unkomfortabel zu realisieren sind (Kopieren, SD/MMC). Bei der Aufnahmeprogrammierung sei ferner die zentrale Bereitstellung von Aunfnahmestart-/Aufnahmeende-Informationen per Multicast erwähnt.

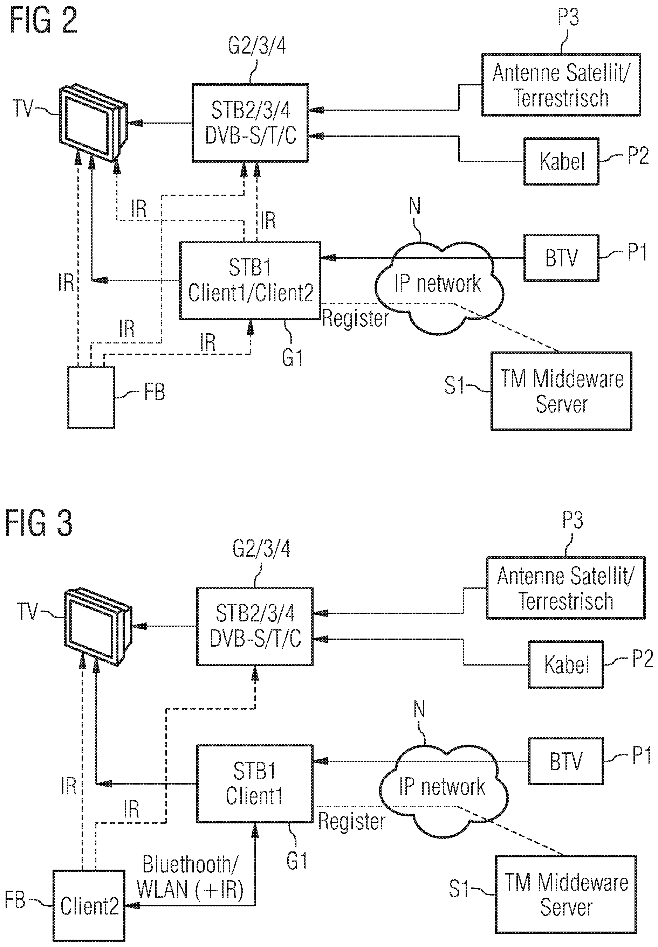

Die Figur 2 zeigt eine vereinfachte Blockdarstellung zur Veranschaulichung einer Vorrichtung zur vereinheitlichten Bedienung einer Vielzahl von Nutzsignalquellen gemäß einem ersten Ausführungsbeispiel, wobei gleiche Bezugszeichen gleiche oder entsprechende Elemente wie in Figur 1 bezeichnen.

Gemäß Figur 2 kann die erfindungsgemäße Vorrichtung in einer als Nutzsignalquelle G1 dienenden ersten Set-Top-Box (STB1) integriert werden, welche über ein erstes Kommunikationsmedium wie zum Beispiel DSL-(Digital Subscriber Line) oder ETH-(Ethernet) Zugang zu internetbasierten Fernsehsendern wie zum Beispiel BTV eines Dienstanbieters P1 (Provider 1) aufweist. Gegebenenfalls können weitere triple play features ermöglicht sein und ausgangsseitig ein analoges oder digitales Signal für eine Ausgabeeineheit bzw. ein Fernsehgerät TV zur Verfügung gestellt werden. Ferner kann eine Fernbedienung FB vorgesehen sein, die eine Fernbedienbarkeit der zur Verfügung gestellten Geräte ermöglicht. Hierbei besitzen die Set-Top-Box STB1 bzw. die Nutzsignalquelle G1 mit der erfindungsgemäßen Vorrichtung Client 1/2 mindestens eine Schnittstelle zur Ausgabe von Fernbedienungssignalen an mindestens ein weiteres Gerät der Unterhaltungselektronik-Umgebung.

Weitere über die Fernbedienungsschnittstelle IR durch Funktionen der Set-Top-Box STB1 gesteuerte Geräte der Unterhaltungselektronik-Umgebung können das Fernsehgerät TV selbst als Ausgabeeinheit sowie eine Vielzahl weiterer Set-Top-Boxen STB2, STB3, STB4 sein, die als Nutzsignalquellen G2/3/4 für Empfang von Digital Video Broadcast Terrestric/Satelite/Cable (DVB-T/S/C) oder weiterer IP-Fernsehanbieter vorbereitet sein können. Ferner können eine Vielzahl weiterer (nicht dargestellter) lokaler Geräte zur Aufzeichnung und Wiedergabe von Programmen insbesondere Festplattenrekorder (HD-Rekorder) oder auch Video-Kassetten-Rekorder in der Unterhaltungselektronik-Umgebung vorliegen. Letztere können wiederum über eigene Empfangseinrichtungen verfügen. Die genannten Funktionen für Empfang und Wiedergabe können ferner in Kombination in einem gleichen Gerät vorliegen (zum Beispiel DVB-S-Integration im Fernsehgerät oder HD im DVB-T-Receiver), was keine Einschränkung der Anwendbarkeit/Einsetzbarkeit der Vorrichtung und des zugehörigen Verfahrens darstellt.

Die Steuerung der Funktionalität der Set-Top-Box STB1 bzw. der Nutzsignalquelle G1 wird durch die integrierte erfindungsgemäße Vorrichtung erreicht. Die aktuelle Information der angebotenen Fernseh-Programme erfolgt beispielsweise durch eine erste elektronische Programmzeitschrift (EPG1, Electronic Program Guide 1). Diese EPG-Daten können hierbei aktiv von der Set-Top-Box STB1 per Internetprotokoll von einem Server abgerufen werden oder werden unmittelbar oder mittelbar unter Steuerung eines zentralen Managements eines TM-Middleware-Servers S1 zum Download in die Set-Top-Box 1 gebracht. Die elektronische Programmzeitschrift EPG1 ist hierbei beschränkt auf das über den TM-Middleware-Server S1 erhältliche Internet-Fernseh/IPTV-Programmangebot.

Die Set-Top-Box STB1 besitzt nunmehr eine zusätzliche Funktionalität bzw. den Client 1, die die Deklaration und Konfiguration lokaler Zusatzfunktionen erlaubt. Insbesondere ist einstellbar, dass es einen weiteren DVB-S-Receiver (STB2) gibt, der ausgerichtet ist auf einen gewissen oder mehrere Satelliten und dessen Signal über einen zweiten Eingang am Fernsehgerät verfügbar ist oder integraler Bestandteil der Funktionalität des Fernsehgeräts ist. Ebenfalls ist konfigurierbar, dass es einen in entsprechender Weise angeschlossenen bzw. integrierten DVB-T/C-Receiver (STB3, STB4) als weitere Nutzsignalquelle gibt, der das Programm einer gewissen Region bzw. eines gewissen Kabelnetzbetreibers bereitstellt. Mit diesen Informationen bzw. Konfigurationsdaten ist die in der Set-Top-Box STB1 bzw. der Nutzsignalquelle G1 realisierte Vorrichtung in der Lage, sich die zugehörigen Funktionsmerkmale F(G1) bis F(Gx) wie beispielsweise EPG-Daten insbesondere für die weiteren Nutzsignalquellen G2, G3 und G4 bzw. deren Set-Top-Boxen STB2, STB3 und STB4 via Internet zu verschaffen bzw. dafür Sorge zu tragen, dass sie Updates bezüglich dieser Information erhält. Die Funktionsmerkmale bzw. die EPG-Daten der weiteren Nutzsignalquellen G2, G3 und G4 werden typischerweise auf Servern eines bzw. jeweils zugehöriger Content-Provider (zum Beispiel Info-Media) hinterlegt sein. Ruft der Benutzer nunmehr über die Fernbedienung FB die EPG-Funktion auf, so erhält er ein einheitliches EPG an der Ausgabeeinheit bzw. dem Fernsehgerät TV. Dieses einheitliche EPG umfasst hierbei die EPG-Daten bzw. individuellen Funktionsmerkmale aller konfigurierten zusätzlichen Empfangsgeräte in textlicher Form. Eine Favoritenverwaltung, Gruppenbildung und alle anderen Funktionen der Kanaladministration sind somit entsprechend erweitert auf die externen Kanäle der Nutzsignalquellen G2 bis G4.

Wählt der Zuschauer nun einen Kanal aus, der von einer externen Nutzsignalquelle bereitgestellt wird, so sind entsprechende Bedienaktionen an dem diesen Fernsehkanal bereitstellenden Gerät und gegebenenfalls auch an dem Fernsehgerät TV selbst notwendig. Diese erfolgen auf Grund der zusätzlichen Funktionalität des Clients 1 der erfindungsgemäßen Vorrichtung automatisch unter Steuerung der Set-Top-Box STB1 bzw. der Nutzsignalquelle G1. Steuerungsschnittstelle zwischen der Set-Top-Box STB1 und der Fernbedienung FB einerseits sowie den zu steuernden Geräten andererseits ist die übliche Bedienschnittstelle dieser Geräte, im Allgemeinen ein Infrarot-Interface IR. Steuerungsseitig sind nun zwei Varianten für dieses Infrarot-Interface möglich. Zum einen kann die Set-Top-Box STB1 einen separaten Ausgang besitzen, der einen gegebenenfalls abgesetzten Infrarot-Sender im Gesichtsfeld der abhängig zu steuernden Geräte bzw. Nutzsignalquellen treibt (siehe Figur 2). Nicht in Figur 2 dargestellte direkte Steuerung aller Geräte über individuelle Fernbedienungen oder eine gemeinsame übergreifende Fernbedienung FB gemäß Figur 2 ist zusätzlich möglich.

Zum anderen kann gemäß Figur 3 die Set-Top-Box STB1 bzw. die Nutzsignalquelle G1 auch eine Bluetooth oder WLAN-Schnittstelle aufweisen, mit der sie mit der Fernbedienung FB kommuniziert, die dann ihrerseits automatisch die abhängig zu steuernden Geräte per Infrarot-Schnittstelle schaltet. In diesem Fall befindet sich der Client 2 zur Realisierung der Infrarot-Schnittstelle IR in der Fernbedienung FB. Gemäß diesem zweiten Ausführungsbeispiel kann die Fernbedienung FB vorzugsweise als PDA (Personal Digital Assistant) mit entsprechenden Schnittstellen ausgebildet sein und realisiert die Funktionalität des Clients 2 zur Ansteuerung der abhängigen Geräte bzw. Nutzsignalquellen G2, G3 und G4 sowie Ausgabeeinheit TV. Im Falle des ersten Ausführungsbeispiels ist diese Funktionalität ebenfalls vorhanden, läuft allerdings zusammen mit der Funktionalität des Clients 1 auf der Set-Top-Box 1 STB1 selbst ab.

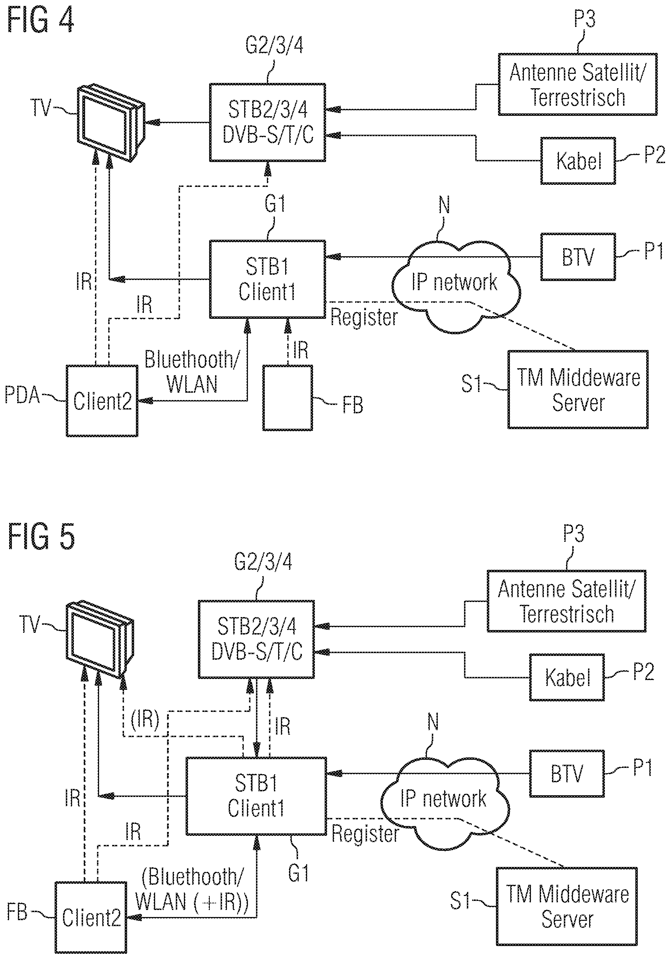

Eine weitere Variante ist in Figur 4 dargestellt, wobei die Steuerung der Set-Top-Box STB1 mit einer eigenen Fernbedienung FB und die Steuerung der abhängigen Geräte bzw. Nutzsignalquellen G2, G3 und G4 sowie Ausgabeeinheit TV durch einen separaten PDA mit erfindungsgemäßem Steuerungsteil Client 2 erfolgt. Ferner existiert die Option von separaten geräteindividuellen Fernbedienungen.

Wird in der elektronischen Programmzeitschrift EPG1 der ersten Nutzsignalquelle G1 geblättert, so erscheint üblicherweise das aktuelle Fernsehbild des Kanals, auf den der Programmzeiger des EPG zeigt, als Hintergrundbild. Mit neueren Techniken sind die aktuellen Fernsehbilder der auf der EPG-Seite enthaltenen Kanäle eventuell parallel eingeblendet als Bild-im-Bild (PIP, Picture In Picture). Zeigt der Programmzeiger des EPGs nun auf einen extern bereitgestellten Kanal, so sind dessen EPG-Daten vollständig vorhanden, jedoch ohne weitere Maßnahmen und ohne ein aktuelles Fernsehbild. Im einfachsten Falle wird erst die Auswahl dieses Kanals die Durchschaltung auf das Fernsehgerät TV bewirken. Hierzu werden gemäß den ersten beiden Ausführungsbeispielen Steuerungsbefehle vom Client 1/2 generiert, die die Ausgabe des entsprechenden Kanals von dem jeweiligen Gerät bewirken sowie die Durchschaltung von dessen Ausgangssignal im Fernsehgerät TV. Zur korrekten Umsetzung eines im EPG ausgewählten Kanals auf das Ausgabegerät kann demzufolge im Client 2 eine konfigurierbare Zuordnungstabelle enthalten sein.

Erlaubt das Fernsehgerät TV die Ausgabe von mindestens zwei verschiedenen Eingangssignalen auf dem gleichen Schirm (split screen oder Überblendung), so kann diese Funktion durch die erfindungsgemäße Vorrichtung zur gleichzeitigen Ausgabe der EPG-Daten, bzw. des vereinheitlichten Funktionsmerkmals und des Fernsehbilds des externen Kanals, auf den der EPG-Zeiger gerade gerichtet ist genutzt werden. Wird dieser Kanal ausgewählt, so erfolgt die Ausblendung der EPG-Daten und der Umstieg zum Vollbild des gewählten Kanals ebenfalls unter Steuerung der erfindungsgemäßen Vorrichtung.

Wird die Zuordnung von extern bereitgestellten Fernsehprogrammen und ihre Sendelage (zum Beispiel Frequenz/Transponder) auf Grund administrativer Tätigkeit verändert oder kommen neue Programme hinzu bzw. werden Programme nicht mehr bereitgestellt, so erfordert dies eine Anpassung auf den externen Nutzsignalquellen G2 bis G4. Obwohl man grundsätzlich einen Programm-Platz für ein bestimmtes Programm manuell wieder diesem Programm unter Bezugnahme auf seine veränderte Sendefrequenz zuweisen kann, wird vorzugsweise ein automatisches Verfahren eingesetzt, wie es beispielsweise ein erneuter Programmsuchlauf darstellt. Dies kann aber unter Umständen zur Folge haben, dass das Mapping zwischen den Funktionsmerkmalen und den zugehörigen Nutzsignalquellen G2 bis G4 erneut manuell anzupassen ist. Für diesen Zweck kann die erfindungsgemäße Vorrichtung die Möglichkeit anbieten, die Zuordnungstabellen für die Nutzsignalquellen G2 bis G4 bzw. Set-Top-Boxen STB2/3/4 manuell zu editieren.

Eine Weiterbildung der erfindungsgemäßen Vorrichtung kann dadurch ermöglicht werden, dass gemäß Figur 5 die TV-Ausgangssignale der Nutzsignalquellen G2/3/4 bzw. der Set-Top-Boxen STB2/3/4 über die Nutzsignalquelle G1 bzw. die Set-Top-Box STB1 mit dem darin realisierten erfindungsgemäßen Client 1 geführt werden. Gemäß diesem vierten Ausführungsbeispiel erhält man ein noch einheitlicheres Look-and-Feel, wobei die Bedienung nochmals vereinfacht und darüber hinaus eine völlig neue Funktionalität ermöglicht wird. Zeigt gemäß diesem vierten Ausführungsbeispiel der Programmzeiger des EPG auf einen externen Kanal bzw. eine externe Nutzsignalquelle, so kann dieser im Hintergrund gleichzeitig ausgegeben werden, und es gibt keinen Layout-Unterschied mehr zum Zeigen auf einen internen Kanal des EPG1. Nach einer Neuzuordnung der externen Kanäle der Nutzsignalquellen G2/3/4 bzw. der Set-Top-Boxen STB2/3/4 kann eine automatische Anpassung der Zuordnung in der Set-Top-Box STB1 vorgenommen werden. Dies kann durch Auswertung des TV-Ausgangssignals in der Set-Top-Box STB1 geschehen. Demzufolge könnte zyklisch oder auf Anforderung eine Funktion der Set-Top-Box STB1 den externen Empfänger in den EPG-Modus oder den Videotext-Modus versetzen, der dann gestattet, das eingestellte Programm in der Set-Top-Box STB1 zu identifizieren und das Mapping entsprechend und ohne Zutun des Bedieners anzupassen.

Normalerweise wird das gleiche Programm von einer Vielzahl von Nutzsignalquellen mit unterschiedlicher Zeitverzögerung angeboten. Gemäß Figur 5 ist nun die Set-Top-Box STB1 in der Lage, ein Programm, das über mehrere Quellen angeboten wird, beispielsweise hinsichtlich seiner Qualität oder seiner relativen zeitlichen Verzögerung zu bewerten und dann automatisch die beste Quelle zuzuordnen, sofern der Benutzer nicht explizit etwas anderes verlangt. Fällt bei dieser Gewichtung der Funktionsmerkmale F(G1) bis F(Gx) zum Beispiel ein Kanal vollständig aus (insbesondere bei Kabel nicht völlig unwahrscheinlich) oder ist das Wetter schlecht, so dass sich das DVB-S-Signal hinsichtlich seiner Qualität stark verschlechtert, so würde die erfindungsgemäß angepasste Set-Top-Box STB1 automatisch das Programm über die jeweils noch best verfügbare externe oder interne Nutzsignalquelle ausgeben. Dies kann jeweils ohne Zutun eines Benutzers automatisch durchgeführt werden.

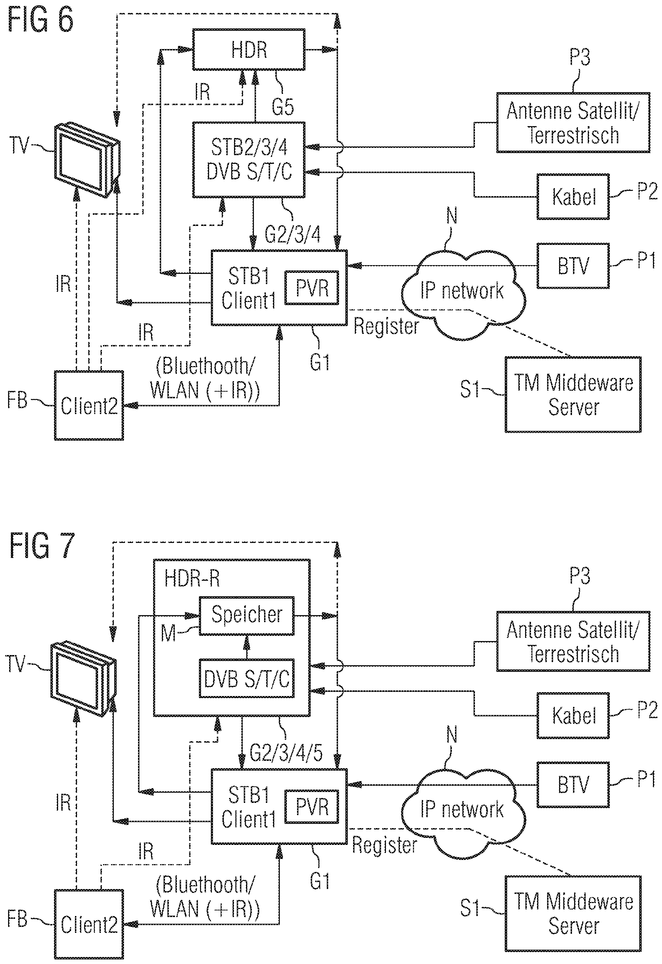

Figur 6 zeigt eine vereinfachte Blockdarstellung zur Veranschaulichung einer vereinheitlichten Bedienung von Nutzsignalquellen gemäß einem fünften Ausführungsbeispiel, wobei gleiche Bezugszeichen gleiche oder entsprechende Elemente bezeichnen wie in Figuren 1 bis 5, weshalb auf eine wiederholte Beschreibung nachfolgend verzichtet wird.

Gemäß Figur 6 kann ferner zumindest ein externer Festplattenrekorder HDR als weitere Nutzsignalquelle G5 im Client 1/2 der Set-Top-Box STB1 bzw. der Fernbedienung FB konfiguriert werden. Es sei darauf hingewiesen, dass ein Festplattenrecorder nicht nur eine Nutzsignalquelle ist, sondern auch eventuell sogar zugleich eine Nutzsignalsenke, wenn er sich im Aufzeichnungsmodus befindet. Alternativ oder zusätzlich zum Festplattenrekorder HDR kann ferner auch ein nicht dargestellter Video-Kassetten-Rekorder (VCR) als weitere Nutzsignalquelle vorgesehen werden, wobei die Ansteuerung ähnlich ist. Besitzt die Set-Top-Box STB1 mit dem erfindungsgemäßen Client 1 bereits eine Aufzeichnungs-/Wiedergabeeinheit PVR zum Beispiel in Form eines Personalized Video Recorders, der lokal oder netzbasiert realisiert sein kann, so gibt die Bedienoberfläche der Set-Top-Box STB1 die Bedienoberfläche des abhängig zu bedienenden externen Festplattenrekorders HDR bzw. der Nutzsignalquelle G5 vor. Voraussetzung für die Nutzbarkeit der Aufzeichnungsfunktion des externen Festplattenrekorders HDR ist hierfür die Heranführung des Ausgangssignals von den Set-Top-Boxen STB1/2/3/4 an den Festplattenrekorder HDR. Andernfalls ist der externe Festplattenrekorder HDR nur als Abspielgerät, also als reine Nutzsignalquelle einsetzbar.

Wie im Falle der Set-Top-Box STB2/3/4 kann das Ausgangssignal des Festplattenrekorders HDR direkt an das Fernsehgerät TV geführt sein. Vorzugsweise wird das Ausgangssignal des Festplattenrekorders HDR jedoch wieder über die Set-Top-Box STB1 mit der erfindungsgemäßen Vorrichtung Client 1 geführt. Die in Figur 6 dargestellte direkte Schnittstelle zwischen dem Festplattenrekorder HDR und den Set-Top-Boxen STB2/3/4 ist eventuell entbehrlich, falls das Signal der Set-Top-Boxen STB2/3/4 über die Set-Top-Box STB1 geschleift werden kann. Eine direkte Verbindung der Set-Top-Boxen STB2/3/4 und der Set-Top-Box STB1 ist entbehrlich, falls die Funktionen der Set-Top-Boxen STB2/3/4 nur in Verbindung mit dem Festplattenrekorder benutzt werden soll. Ferner sei darauf hingewiesen, dass die Existenz der Set-Top-Boxen STB2/3/4 für den erfindungsgemäßen Betrieb des Festplattenrekorders keine Voraussetzung ist.

Da gemäß Figur 6 die Set-Top-Box STB1 eine systemeigene lokale oder netzbasierte Aufzeichnungs-/Wiedergabeeinheit PVR unterstützt, kann sie insbesondere die Aufzeichnung eines Fernsehkanals in dieser Aufzeichnungseinheit PVR ermöglichen. Durch geeignete Erweiterung des erfindungsgemäßen Clients 1/2 bzw. einer derartigen Funktionalität in der Set-Top-Box oder einer zugehörigen Fernbedienung kann eine Aufzeichnung eines Signals der Set-Top-Boxen 1/2/3/4 auf dem Festplattenrekorder HDR gesteuert werden. Dies erlaubt insbesondere das Ad-hoc-Aufzeichnen durch den Festplattenrekorder HDR in völliger Analogie zur Aufzeichnungs-/Wiedergabeeinheit PVR. Daher sind temporär oder permanent auf dem Fernsehgerät TV ausgegebene Indikationen in gleicher Weise und mit gleichem Look-and-Feel möglich. Die Ansteuerung des Festplattenrekorders HDR kann demzufolge in völliger Analogie zu dem vorstehend beschriebenen Verfahren über dessen normale Bedienschnittstelle (im Allgemeinen Infrarot-Schnittstelle IR) erfolgen.

Aufgezeichnete Daten bzw. Aufzeichnungen der Aufzeichnungs-/Wiedergabeeinheit PVR sind üblicherweise in Form von strukturierten, im Allgemeinen aber linearen Datenlisten (Movie-Listen) verfügbar. Eine Namensgebung der Titel erfolgt automatisch nach vordefinierten Regeln. Die Konfiguration bzw. Ablegung der Konfigurationsdaten im Konfigurationsdatenspeicher 1 für den externen Festplattenrekorder HDR in der erfindungsgemäß erweiterten Set-Top-Box STB1 bewirkt genau einen globalen, auf diese Nutzsignalquelle G5 bzw. diesen Festplattenrekorder HDR verweisenden Eintrag in der Audio-/Video-Datenliste der Aufzeichnungs-/Wiedergabeeinheit PVR. Die Auswahl dieses Eintrags führt zum Abruf der Datenliste des ausgewählten Festplattenrekorders HDR. Aufruf, Durchschaltung und Navigation in der Datenliste des Festplattenrekorders HDR erfolgt dann wiederum unter Steuerung der Set-Top-Box STB1 bzw. des erfindungsgemäßen Clients 1/2. Wird der letzte Titel der Datenliste des Festplattenrekorders HDR erreicht, so führt dies zum Rücksprung in die Datenliste der Aufzeichnungs-/Wiedergabeeinheit PVR. Die Auswahl eines Titels aus der Datenliste des Festplattenrekorders führt zu dessen Ausgabe. Sogenannte "Trick-play-Funktionen" werden in einheitlicher Bedienung über die Aufzeichnungs-/Wiedergabeeinheit PVR und den Festplattenrekorder HDR verfügbar. Allein die Audio-/Video-Datenliste des Festplattenrekorders HDR ist screenlevel-integriert, d.h. durch ein den Festplattenrekorder HDR repräsentierendes Verzeichnis, da diese Information ohne weitere Schnittstellen und Intelligenz des Festplattenrekorders HDR der erfindungsgemäß erweiterten Set-Top-Box STB1 nicht verfügbar werden kann. Ausgabe der Audio-/Video-Datenliste des Festplattenrekorders HDR erfolgt damit zweistufig durch Auswahl des HDR-Verzeichnisses und Ansteuerung des Festplattenrekorders HDR zur Ausgabe seiner Audio-/Video-Datenliste.

Somit ist es ohne Weiteres möglich, die Datenliste mit einem Bild aus der Aufzeichnung mittels Bild-im-Bild-Technik anzureichern, sofern dies der Festplattenrekorder HDR unterstützt.

Eine Programmierung von Aufzeichnungen der Aufzeichnungs-/Wiedergabeeinheit PVR erfolgt üblicherweise über die lokale elektronische Programmzeitschrift (EPG). Gleiches wird verfahrensgemäß für Aufnahmen durch den Festplattenrekorder HDR in der Set-Top-Box STB1 unterstützt. Demzufolge erfolgt die Kennzeichnung eines aufzunehmenden Programms in gleicher Weise derart erweitert, dass angegeben werden kann, ob eine Aufnahme mit der Aufzeichnungs-/Wiedergabeeinheit PVR oder dem Festplattenrekorder HDR gewünscht ist. Hierfür können alle Programmkanäle mit EPG-Information in Betracht kommen, und zwar unabhängig von ihrer Herkunft, das heißt Set-Top-Box 1/2/3/4. Sollte für einen Kanal keine EPG Information vorliegen, so kann per Kanal und Zeitintervall programmiert werden.

Aus den EPG-Daten sind beispielsweise Anfangszeitpunkt und Endzeitpunkt einer jeweils interessierenden Sendung ersichtlich. Die tatsächliche Aufzeichnung beginnt jedoch im Allgemeinen früher und endet später, wobei Vorlauf und Nachlauf konfigurierbar in dem Festplattenrekorder HDR oder der Aufzeichnungs-/Wiedergabeeinheit PVR sind. Liegt für einen Kanal keine elektronische Programmzeitschrift EPG vor, so kann wiederum per Kanal und Zeitintervall programmiert werden. In diesem Fall kann eine durch Settings bestimmte Schutzzeit vor Anfang und nach Ende aufgeschlagen werden. Die komplette Aufnahmesteuerung erfolgt vorzugsweise mit der Logik der erfindungsgemäß erweiterten Set-Top-Box STB1 für die voranstehend beschriebenen zeitabhängigen Aufzeichnungen. Eine Administration von Aufzeichnungsanforderungen ist in gleicher Weise möglich wie bei der Aufzeichnungs-/Wiedergabeeinheit PVR.

Als weitere Merkmale der erfindungsgemäß erweiterten Set-Top-Box STB1 ergeben sich ferner die Aufnahme eines externen Signals auf der Aufzeichnungs-/Wiedergabeeinheit PVR sowie das Überspielen einer Aufzeichnung zwischen dem Festplattenrekorder HDR und der Aufzeichnungs-/Wiedergabeeinheit PVR. Auch kann der externe Festplattenrekorder HDR für Pause/Resume/ Live-TV eingesetzt werden, falls der Zuschauer gestört wird und sich nach der Störung wieder dem Programm zuwenden möchte und genau an der Stelle der Störung fortsetzen möchte. Der wesentliche Vorteil ist allein schon der im Vergleich zur Set-Top-Box zu erwartende größere und billigere Speicherplatz bei der Nutzung eines externen Festplattenrekorders HDR. Darüber hinaus erhält man weitere neue Features, welche als Funktionen des Festplattenrekorders automatisch angeboten werden, wie zum Beispiel das Betrachten von Bildern, Bildsammlungen im Look-and-Feel der erfindungsgemäß erweiterten Set-Top-Box STB1 am Fernsehgerät TV. Hierbei können auch die Hardware-Voraussetzungen des Festplattenrekorders mit einbezogen werden (zum Beispiel SD/MMC-Einschub am Festplattenrekorder HDR). Optional können wiederum zusätzlich zur Fernbedienung FB ein nicht dargestellter PDA zur Realisierung von weiteren Features verwendet werden, wodurch beispielsweise die parallele Ausgabe von Signalen verschiedener Quellen über das Fernsehgerät TV und den PDA ermöglicht ist.

Figur 7 zeigt eine vereinfachte Blockdarstellung zur Veranschaulichung einer vereinheitlichten Bedienung von Nutzsignalquellen gemäß einem sechsten Ausführungsbeispiel, wobei gleiche Bezugszeichen gleiche oder entsprechende Elemente bezeichnen wie in Figuren 1 bis 6, weshalb auf eine wiederholte Beschreibung nachfolgend verzichtet wird.

Bei terrestrischen Fernsehsignalen oder auch im DVB-Signal können Indikationen für den Beginn und das Ende einer aufzuzeichnenden Sendung (VPS-Signal, Video Programming System) enthalten sein. Sollen derartige Steuersignale zur Start-/Stopp-Steuerung einer Aufnahme herangezogen werden, so muss die Aufzeichnungseinheit bzw. der Festplattenrekorder HDR über eine eigene Empfangseinheit verfügen. Er wird damit zum kombinierten Gerät HDR-R, wie es üblicherweise zum Kauf angeboten wird. Soll eine derartige Eigenschaft genutzt werden, so verlagert sich die erfindungsgemäße Ansteuerung auf die Programmierung der Aufnahme eines Empfangs-Festplattenrekorders HDR-R gemäß Figur 7 aus der erfindungsgemäß erweiterten Set-Top-Box STB1 heraus. Die eigentliche Aufnahmesteuerung erfolgt dann unter der Steuerung des Empfangs-Festplattenrekorders HDR-R selbst. Der Empfangs-Festplattenrekorder HDR-R realisiert hierbei die Nutzsignalquellen G2, G3, G4 und G5, welche jeweils den Empfängern DVB-B/T/C sowie dem eigentlichen Aufzeichnungsspeicher M zugeordnet sind.

Sollen demzufolge derartige steuersignal-artige oder genauer gesagt VPS-artige Aufzeichnungen auf dem Festplattenrekorder HDR-R für Signale durchgeführt werden, für die der Festplattenrekorder keinen eigenen Empfänger hat, so werden diese Informationen von einem speziell dafür ausgelegten Server bzw. Steuersignal-Generator S3 an die erfindungsgemäß erweiterte Set-Top-Box STB1 herangeführt. Die Set-Top-Box STB1 behält dann die Aufnahmesteuerung des Festplattenrekorders HDR bzw. HDR-R.

Ein geeignetes Verfahren ist hierfür das temporäre Einbinden der Set-Top-Box STB1 in eine Multicast-Gruppe, die die verallgemeinerten Start/Stopp-Informationen für die Aufzeichnung einer Sendung zeitgerecht verbreitet. Die Set-Top-Box STB1 lauscht dann auf Anfang und Ende der gewünschten Sendung und steuert den Festplattenrekorder HDR entsprechend an. Als Quelle für eine derartige VPS-artige Information ist beispielsweise ein zentraler Server in einem paketvermittelnden Netzwerk N, der über entsprechende Empfangsfunktionen verfügt.

Die Abbildung der Bedienoperationen für die Nutzsignalquellen G2/3/4 sowie für den Festplattenrekorder HDR bzw. die Nutzsignalquelle G5 können hierbei mit der Gerätekennung (Hersteller-Typ) in der erfindungsgemäß erweiterten Set-Top-Box STB1 als Konfigurationsdaten verfügbar gemacht werden. Sie können auch manuell konfiguriert werden, oder es kann eine automatische Zuordnungsfunktion vorhanden sein, die insbesondere Programmplatzabbildungen der Set-Top-Boxen STB2/3/4 vornimmt. Daneben kann optional ein Lern-Modus bzw. Teach-Modus in der Set-Top-Box STB1 verfügbar sein. In diesem Lern-Modus fordert die Set-Top-Box STB1 den Benutzer auf, gewisse Bedienschritte und -aktionen an den abhängig zu betreibenden Geräten wie beispielsweise den Festplattenrekorder HDR und die Set-Top-Boxen STB2/3/4 unter Verwendung der geräteeigenen Fernbedienungen auszuführen. Die erfindungsgemäß erweiterte Set-Top-Box STB1 hat dann beispielsweise einen zusätzlichen Infrarot-Empfänger, der die jeweiligen Signale erkennt und speichert. Damit bekommt die erfindungsgemäß erweiterte Set-Top-Box STB1 Kenntnis, welche Bedienaktionen mit welcher Bediensignalfolge herbeigeführt werden kann.

Die im vorstehenden Fall der durch Steuersignale getriebenen Aufnahme erforderliche Navigation durch die elektronische Programmzeitschrift des Festplattenrekorders HDR-R wird hierdurch erlernbar für die erweiterte Set-Top-Box STB1 unter Ausnutzung der Set-Top-Box STB1 zur Verfügung stehenden EPG-Daten.

Die manuell konfigurierten Konfigurationsdaten Kl bis Kx können darüber hinaus über den optional vorhandenen PDA (Personal Digital Assistant) gesichert und zurückgespielt werden. Dies erhöht die Bedienerfreundlichkeit. Es ist somit nicht zu befürchten, dass bei Stromausfall, Hardware-Defekt oder Anschaffung eines neuen Geräts die gewonnenen Mapping-Daten bzw. Zuordnungs-Tabellen der abhängigen Bedienung verloren sind.

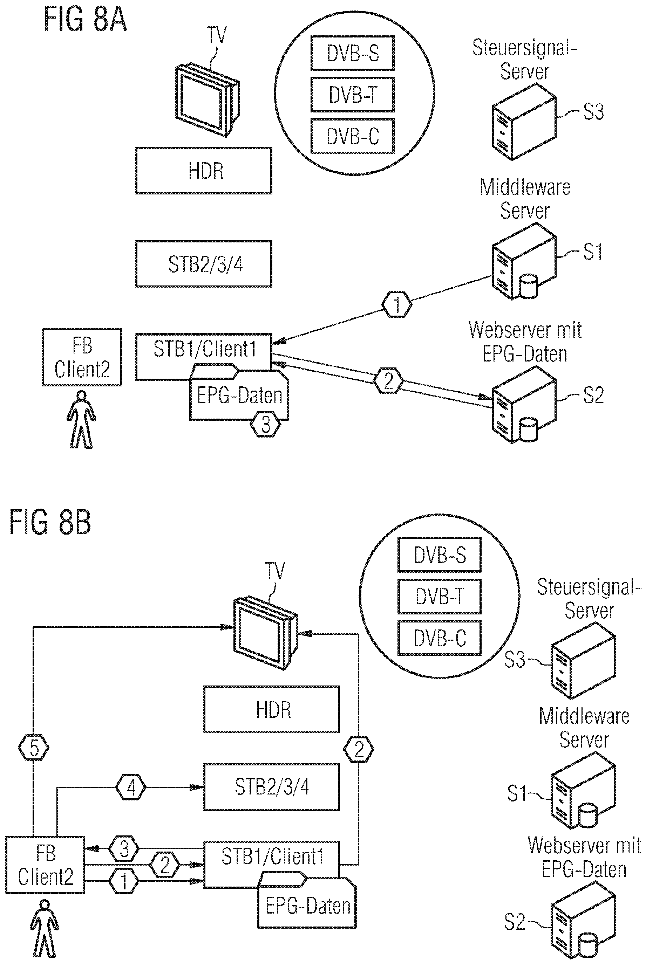

Die Figur 8A zeigt eine vereinfachte Blockdarstellung zur Veranschaulichung der Aufbereitung von individuellen Funktionsmerkmalen bzw. EPG-Daten. Gemäß Figur 8A werden sogenannte EPG-Daten als Beispiele für individuelle Funktionsmerkmale zum Beispiel von einem Middleware-Server S1 innerhalb eines paketvermittelnden Netzes zur Verfügung gestellt. Die EPG-Daten für die Set-Top-Boxen STB2/3/4 bzw. die Nutzsignalquellen G2, G3 und G4 werden demzufolge vom Webserver S1 heruntergeladen.

Gemäß dem Pfeil (1) verteilt demzufolge der Middleware-Server S1 die Funktionsmerkmale F(G1) bis F(Gx) (z.B. die EPG-Information) für die Internet-Fernsehkanäle an die erfindungsgemäß erweiterte Set-Top-Box STB1. Der Download dieser Daten wird in der Regel über Multicast erfolgen, um eine Skalierbarkeit der Internet-Fernseh-/IPTV-Lösung zu gewährleisten. Falls das IP-Netz bzw. das Internet nicht multicastfähig ist, kann der Download auch durch die erfindungsgemäß erweiterte Set-Top-Box STB1 über Unicast angestoßen werden. Hinsichtlich der weiteren individuellen Funktionsmerkmale werden diese gemäß Pfeil (2) für die Fernsehkanäle der Set-Top-Boxen STB2/3/4 vom Client 1 durch Abfrage eines Webservers S2 durchgeführt, der die entsprechenden EPG-Daten bzw. individuellen Funktionsmerkmale enthält. Das Abfrageintervall kann beispielsweise über Voreinstellungen im Client 1 definiert werden. Wie bereits eingangs beschrieben wurde, erfolgt nunmehr gemäß (3) die Aufbereitung der individuellen Funktionsmerkmale F(G1) bis F(Gx) bzw. der EPG-Daten.

Bei dieser Aufbereitung der ermittelten Funktionsmerkmale F(G1) bis F(Gx) bzw. der EPG-Daten werden die neu heruntergeladenen Funktionsmerkmale beispielsweise in die bereits bestehenden EPG-Daten integriert, wodurch man ein vereinheitlichtes Funktionsmerkmal F(G*) für die Gesamtheit der Nutzsignalquellen erhält bzw. einen vereinheitlichten EPG-Datensatz für alle Set-Top-Boxen STB1/2/3/4 sowie weitere zusätzliche externe Geräte.

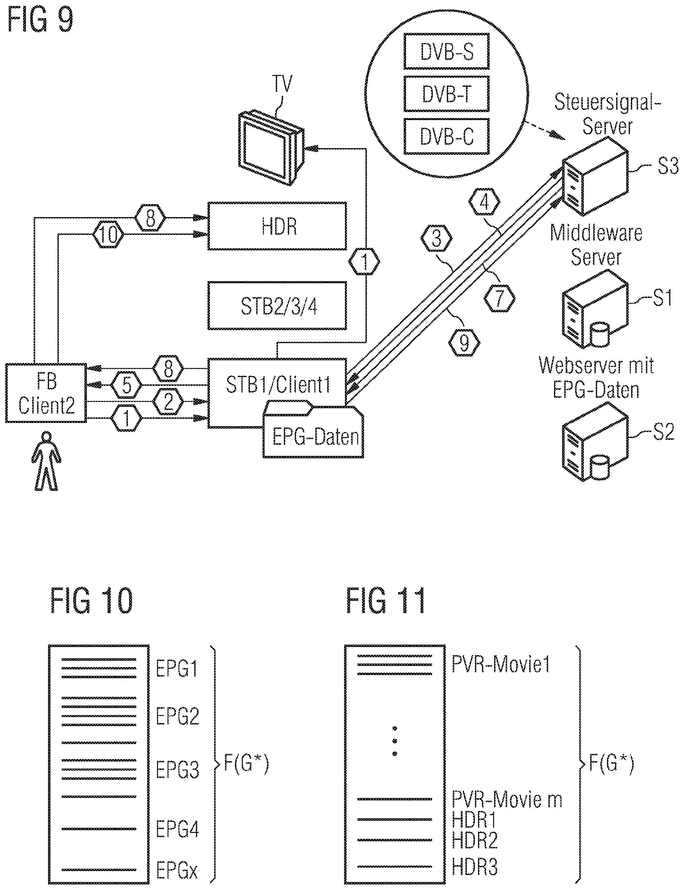

Die Figur 10 zeigt eine vereinfachte Darstellung zur Veranschaulichung eines entsprechenden vereinheitlichten Funktionsmerkmals F(G*), wobei alle in der Unterhaltungselektronik-Umgebung verfügbaren EPG-Daten EPG1 bis EPGx aufgelistet sind. Vorzugsweise werden hierbei keine doppelten EPG-Daten dargestellt und bei Vorliegen von mehreren gleichwertigen EPG-Daten der Datensatz verwendet, der z.B. eine höchste Qualität oder geringste Verzögerung ermöglicht. Die Visualisierung kann, wie dargestellt, nach den Nutzsignalquellen, aber auch insbesondere nach den Kriterien des Benutzers erfolgen, z.B. in alphabetischer Reihenfolge der Programmkanäle oder in Form einer aus einer Teilmenge bestehenden Favoritenliste, die sich über die Gesamtheit der Nutzdatenquellen erstreckt.

Figur 8B zeigt eine vereinfachte Blockdarstellung zur Veranschaulichung einer erfindungsgemäßen Kanalauswahl durch den Client 2. Gemäß Figur 8B werden beim Pfeil (1) bei Aufruf des zum Beispiel EPGs per Tastendruck mittels der Fernbedienung FB zunächst die vereinheitlichten EPG-Daten F(G*) aller Set-Top-Boxen STB zum Fernsehgerät TV übertragen, die den gewählten EPG Abschnitt betreffen. Gemäß Pfeil (2) wählt der Benutzer daraufhin einen Kanal, der beispielsweise im EPG-Bereich der Set-Top-Box STB2 liegt, aus. Der Client 1 signalisiert hierbei diese Information, das heißt, die Nummer der Nutzsignalquelle bzw. der Set-Top-Box sowie den entsprechenden Kanal und sendet diese Information an den Client 2. Wie bereits eingangs beschrieben wurde, kann diese Signalisierung intern in der Set-Top-Box STB1 vorliegen oder aber über Bluetooth, WLAN oder eine sonstige Schnittstelle zum extern ausgelagerten Ansteuerteil Client 2 in der Fernbedienung FB zugeführt werden. Gemäß Pfeil (4) sendet daraufhin der beispielsweise in der Fernbedienung FB befindliche Client 2 den entsprechenden Infrarot-Code zur ausgewählten Set-Top-Box STB2 bzw. zur Nutzsignalquelle G2, damit diese auf den entsprechenden Kanal umschaltet. Abschließend wird gemäß Pfeil (5) der Client 2 in der Fernbedienung FB die Ausgabeeinheit TV auf den entsprechenden Video-Eingang der Nutzsignalquelle G2 bzw. der Set-Top-Box STB2 schalten, sofern die Set-Top-Box STB2 den Video-Ausgang direkt am Fernsehgerät TV angeschlossen hat und der Video-Ausgang nicht durch die Set-Top-Box STB1 geschleift wird.

Figur 9 zeigt eine vereinfachte Blockdarstellung zur Veranschaulichung eines Signalisierungsablaufs bei einer Aufnahme-Programmierung aus EPG mittels eines separat vom Nutzsignal bereitgestellten Steuersignals, wobei gleiche Bezugszeichen gleiche oder entsprechende Elemente bezeichnen wie in Figuren 8A oder 8B, weshalb auf eine wiederholte Beschreibung nachfolgend verzichtet wird.

Gemäß Pfeil (1) können bei Aufruf der elektronischen Programmzeitschrift EPG per Tastendruck mittels der Fernbedienung FB die vereinheitlichten Funktionsmerkmale F(G*) bzw. anzeigbare Ausschnitte der vereinheitlichten elektronischen Programmzeitschrift aller Nutzsignalquellen zum Fernsehgerät TV übertragen werden. Gemäß Pfeil (2) wählt der Benutzer in der vereinheitlichten elektronischen Programmzeitschrift EPG eine Sendung eines Kanals, der im Festplattenrekorder HDR verfügbar ist, zur Aufnahme aus. Der Client 1 sendet daraufhin gemäß Pfeil (3) eine sogenannte "IGMP Join"-Nachricht mit Programm-/Kanal-Information an den Steuersignalgenerator S3 bzw. den Server zur Verteilung eines Start-/Stopp-Signals für den Mitschnitt einer Sendung ("VPS-Signal") aus. Sobald diese VPS-Information anliegt, signalisiert der Server S3 für die Verteilung des VPS-Signals bzw. der Steuersignal-Generator S3 gemäß Pfeil (4) an alle registrierten Clients per IP-Multicast. Gemäß Pfeil (5) signalisiert der Client 1 daraufhin "Start Aufnahme (STB-Nr./ Kanal)" an den Client 2 in der Fernbedienung FB. Gemäß Pfeil (6) schaltet der Client 2 den Festplattenrekorder HDR auf den entsprechenden Kanal und generiert den entsprechenden Infrarot-Code für "Start Aufnahme". Der Festplattenrekorder HDR beginnt nunmehr auf Grund der Infrarot-Signalisierung die Aufzeichnung des Programms. Sobald die aktuelle Sendung beendet ist, signalisiert der Steuersignal-Generator S3 bzw. Server für die Verteilung des VPS-Signals an alle registrierten Clients per IP-Muliticast (Pfeil (7)). Wiederum signalisiert gemäß Pfeil (8) der dieses Steuersignal empfangende Client 1 den Befehl "Stop Aufnahme (STB-Nr./Kanal)" an den Client 2 in der Fernbedienung FB. Ferner sendet der Client 1 eine "IGMP LEAVE"-Nachricht mit Programm/Kanal-Information an den Steuersignal-Generator S3 bzw. den Server für die Verteilung des VPS-Signals. Ferner wird vom Client 2 der Fernbedienung FB der Infrarot-Code für "Stop Aufnahme" zum Festplattenrekorder HDR erzeugt und gesendet, wodurch dieser die Aufzeichnung beendet. Auf diese Weise können in einer Unterhaltungselektronik-Umgebung erstmalig funktionale Einschränkungen bzgl. der automatischen zeitgerechten Aufzeichnungsfähigkeit von Aufzeichnungsgeräten kompensiert werden.

Figur 11 zeigt eine vereinfachte Darstellung zur Veranschaulichung einer Audio-Video-Datenliste, wie sie als vereinheitlichtes Funktionsmerkmal für alle Nutzsignalquellen erzeugt und am Fernsehgerät TV dargestellt werden kann. Demzufolge werden nicht nur die von der Aufzeichnungs-/Wiedergabeeinheit PVR erfassten Filme oder Audiodaten, sondern darüber hinaus die in den verschiedensten Festplattenrekordern HDR1 bis HDR3 abgelegten Daten wie beispielsweise Video-Filme benutzerfreundlich und sehr übersichtlich dargestellt. Zur Visualisierung der in einem Festplattenrekorder HDR1 ... HDR3 vorliegenden Movie-Liste ist jedoch im einfachsten Falle bei Fehlen einer Ausgabefunktion für diese Liste nur die Ausgabe des jeweiligen HDR Verzeichnisses möglich. Erst die Auswahl des jeweiligen Verzeichnisses bewirkt dann die Ansteuerung des Festplattenrekorders HDR 1 ... HDR3 zur Ausgabe seiner Movie-Liste auf das Ausgabegerät TV.

Die Ausgabe einer Audio-/Video-Datenliste (Movie-Liste) eines separaten Festplattenrekorders HDR kann in mehrfacher Weise vereinheitlicht erfolgen.

Gemäß einer ersten Variante kann die lokale Movie-Liste über eine Schnittstelle des HDR übertragbar sein. D.h., sie ist lokal im HDR vorhanden und kann durch Ausgabe von Steuersignalen im Rahmen der Funktionsmerkmalermittlung vom HDR abgefragt werden. In diesem Falle ist die vollständige Movie-Liste des HDR sofort zur Generierung einer einheitlichen und übergreifenden Movie-Liste verfügbar. Sind Bildinformationen im HDR verfügbar, die den Inhalt eines Movie in Form einer Bild-im-Bild Information visualisieren sollen, so können diese vorzugsweise ebenfalls im Rahmen der Funktionsmerkmalermittlung abgerufen werden und der Aufbereitung der vereinheitlichten übergreifenden Movie-Liste zugeführt werden.

Gemäß einer zweiten Variante kann die in der vorstehend genannten Variante beschriebene Funktionalität des HDR von einem lokalen Server, der von dem HDR verschieden ist, z.B. von einem mit der Unterhaltungselektronik-Umgebung vernetzten lokalen PC bereitgestellt werden, der z.B. zur Administration der Movies benutzt wird und ggf. auch selbst in HDR-Funktionalität in Erscheinung treten kann. Von diesem lokalen Server können dann die u.U. mehreren Movie-Listen einer Mehrzahl von Festplattenrekorder HDR1 ... HDR3 ggf. inklusive Bild-in-Bild Information der verfügbaren Movies abgerufen werden zur Aufbereitung des vereinheitlichten Funktionsmerkmals der übergreifenden und einheitlichen Audio-/Video- Datenliste.

Kann eine explizite Abfrage der Movie-Liste eines HDR nicht erfolgen, so kann gemäß einer weiteren Variante das Nutzdatensignal des HDR über die erfindungsgemäße Vorrichtung geführt sein. In diesem Falle kann im Rahmen der Funktionsmerkmalermittlung die Ansteuerung des HDR zur Ausgabe seiner Movie-Liste über die Nutzdatenschnittstelle erfolgen. Geeignete Analyse des zugehörigen Nutzdatensignals in der erfindungsgemäßen Vorrichtung erlaubt dann die Ermittlung der Movie-Liste als Voraussetzung der Bereitstellung einer vereinheitlichten und übergreifenden Movie-Liste. Hierbei können ggf. ebenfalls Bild-in-Bild Informationen pro Movie abgerufen oder erkannt, erfasst und zwischengespeichert werden zur Visualisierung der Inhalte der Movies in der vereinheitlichten übergreifenden Movie-Liste.

Stehen die vorstehend beschriebenen Varianten sämtlich nicht zur Verfügung, so reduziert sich die Vereinheitlichung auf die Repräsentation der Movie-Liste eines Festplattenrekorders HDR als Verzeichnis. Durch Auswahl des Verzeichnisses wird die Ausgabe der Movie-Liste des HDR auf das Ausgabegerät TV bewirkt. Die Vereinheitlichung ist damit eingeschränkt. Präsentation des HDR-spezifischen Verzeichnisses erfolgt in der durch den HDR vorgegebenen Art und Weise, jedoch immer noch über vereinheitlichte Bedienfunktionen, die durch Client 1/2 der erfindungsgemäßen Vorrichtung ermöglicht werden.

Die Erfindung wurde vorstehend anhand einer erweiterten Set-Top-Box beschrieben. Sie ist jedoch nicht darauf beschränkt, sondern kann in gleicher Weise in einer beliebigen Nutzsignalquelle oder als separates Gerät realisiert werden. Ferner wurde die Erfindung anhand der Ansteuerung über eine Infrarot-Schnittstelle der Nutzsignal-Datenquellen beschrieben. Sie ist jedoch nicht darauf beschränkt und umfasst in gleicher Weise auch andere Ansteuerschnittstellen.

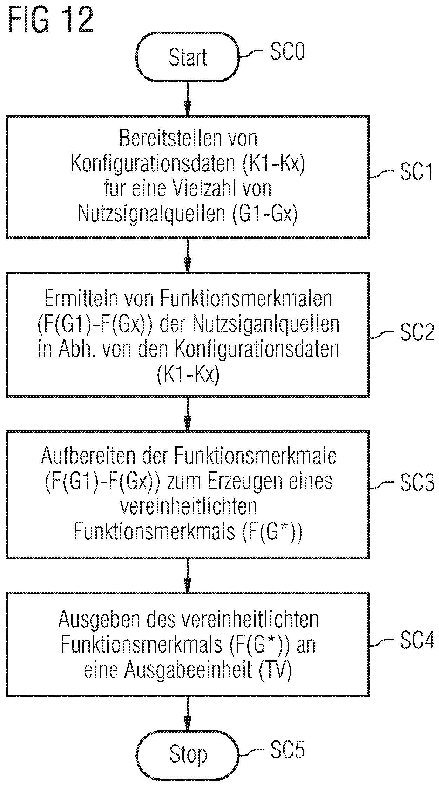

Figur 12 zeigt ein vereinfachtes Flussdiagramm zur Veranschaulichung wesentlicher Verfahrensschritte bei der Realisierung einer vereinheitlichten Bedienung von Nutzsignalquellen.

Nach einem Start in Schritt SC0 werden in einem Schritt SC1 zunächst Konfigurationsdaten Kl bis Kx für eine Vielzahl von Nutzsignalquellen G1 bis Gx bereitgestellt. Diese Konfigurationsdaten können hierbei sowohl manuell als auch automatisch eingegeben werden. Als Konfigurationsdaten werden beispielsweise ein Gerätetyp der Nutzsignalquellen G1 bis Gx und ein jeweiliger Hersteller verwendet, wodurch sich die jeweiligen Eigenschaften und Leistungsmerkmale der Nutzsignalquellen genau identifizieren lassen. Eine Nutzsignalquelle kann zugleich auch eine Nutzsignalsenke sein, sofern sie Aufzeichnungsfunktionalität besitzt.

In einem Schritt SC2 werden nunmehr anhand der Konfigurationsdaten K1 bis Kx die jeweiligen individuellen Funktionsmerkmale F(G1) bis F(Gx) der verschiedenen in der Unterhaltungselektronik-Umgebung vorhandenen Nutzsignalquellen G1 bis Gx ermittelt. Wie bereits beschrieben wurde, können diese Daten beispielsweise von einem jeweiligen Server in einem paketvermittelnden Netz heruntergeladen werden, wobei sie jedoch auch unmittelbar bei den Geräten erfragt werden können. Gemäß einem Schritt SC3 wird anschließend die Aufbereitung der individuellen Funktionsmerkmale F(G1) bis F(Gx) zum Erzeugen eines vereinheitlichten Funktionsmerkmals für die Gesamtheit der Nutzsignalquellen durchgeführt. Hierbei kann neben einer Integration bzw. Aneinanderreihung der verschiedenen Funktionsmerkmale auch eine Sortierung oder Auswahl beispielsweise abhängig von einer Qualität oder sonstigen Merkmalen wie beispielsweise einer Verzögerung usw. durchgeführt werden.

In einem Schritt SC4 wird schließlich das vereinheitlichte Funktionsmerkmal F(G*) an einer Ausgabeeinheit wie beispielsweise einem Fernsehgerät TV ausgegeben, wodurch ein Benutzer eine sehr komfortable Übersicht der Funktionsmerkmale seiner gesamten Unterhaltungselektronik-Umgebung in der von ihm gewünschten Form erhält. Die vereinheitlichen Funktionsmerkmale können insbesondere Ausgabe von Bild-in-Bild Information bezogen auf TV-Programmkanäle eines EPG und/oder Videos einer Audio-/Video-Datenliste enthalten. Das Verfahren endet in Schritt SC5.

## Patentansprüche

1. Vorrichtung zur vereinheitlichten Bedienung einer Vielzahl von Nutzsignalquellen (G1 bis Gx) mit:
einer Funktionsmerkmal-Aufbereitungseinheit (3) zum Aufbereiten der ermittelten Funktionsmerkmale (F(G1) bis F(Gx)) und zum Erzeugen mindestens eines vereinheitlichten Funktionsmerkmals (F(G*)) für die Gesamtheit der Nutzsignalquellen (G1 bis Gx),
**gekennzeichnet durch**
eine Speichereinheit zum Speichern von Konfigurationsdaten (K1 bis Kx), die Informationen hinsichtlich einer Verschaltung der Vielzahl von Nutzsignalquellen (G1 bis Gx) innerhalb einer Unterhaltungselektronik-Umgebung enthalten;
eine Funktionsmerkmal-Ermittlungseinheit (2) zum Ermitteln von individuellen Funktionsmerkmalen (F(G1) bis F(Gx)) der Nutzsignalquellen in Abhängigkeit von den Konfigurationsdaten (K1 bis Kx),
wobei die Funktionsmerkmal-Aufbereitungseinheit (3) zum Erzeugen des mindestens einen vereinheitlichten Funktionsmerkmals (F(G*)) eine Gewichtung ermittelter gleicher individueller Funktionsmerkmale (F(G1) bis F(Gx)) durchführt,
wobei durch die Gewichtung Qualitätsunterschiede der jeweiligen Nutzsignalquellen (G1 bis Gx) berücksichtigt werden, und
wobei Mittel vorgesehen sind, dass, falls ein Nutzdatensignal von mehreren Nutzsignalquellen (G1 bis Gx) unterschiedlicher Technologie zugleich angeboten wird, über mitlaufend verfügbare Qualitätskriterien und Auswertung einer zeitlichen Verzögerung des Nutzdatensignals eine mitlaufende Bewertung erfolgt und eine dynamische Auswahl und Zuordnung einer bestens geeigneten Nutzsignalquelle aus der Mehrzahl der Nutzsignalquellen (G1 bis Gx) unterschiedlicher Technologie durchgeführt wird.

2. Vorrichtung nach Patentanspruch 1,
**dadurch gekennzeichnet,**
**dass** die Funktionsmerkmal-Ermittlungseinheit (2) ein Ansteuerteil (Client 2) aufweist, das die Nutzsignalquellen (G1 bis Gx) in Abhängigkeit von den Konfigurationsdaten (K1 bis Kx) ansteuert und hierbei individuelle Funktionsmerkmale (F(G1) bis F(Gx)) abruft.

3. Vorrichtung nach Patentanspruch 1 oder 2,
**dadurch gekennzeichnet,**
**dass** die Funktionsmerkmal-Ermittlungseinheit (2) eine Verbindung zu einem Funktionsmerkmalsspeicher (S2) in einem Netzwerk (N) herstellt und hierbei mindestens eines der individuellen Funktionsmerkmale (F(G1) bis F(Gx)) abruft.

4. Vorrichtung nach einem der Patentansprüche 2 bis 3,
**dadurch gekennzeichnet,**
**dass** das Ansteuerteil (Client 2) in einem externen Gerät (FB; PDA) realisiert ist und die Nutzsignalquellen (G1 bis Gx) über eine Infrarot-Schnittstelle (IR) oder eine Funk-Schnittstelle (Bluetooth/WLAN) ansteuert.

5. Vorrichtung nach einem der Patentansprüche 1 bis 4,
**dadurch gekennzeichnet,**
**dass** die individuellen Funktionsmerkmale (F(G1) bis F(Gx)) jeweilige elektronische Programmzeitschriften (EPG1 bis EPGx) der Nutzsignalquellen (G1 bis Gx) darstellen und das vereinheitlichte Funktionsmerkmal (F(G*)) eine für alle Nutzsignalquellen (G1 bis Gx) gültige vereinheitlichte elektronische Programmzeitschrift darstellt.

6. Vorrichtung nach Patentanspruch 5,
**dadurch gekennzeichnet,**
**dass** das mindestens eine vereinheitlichte Funktionsmerkmal (F(G*)) eine für alle Nutzsignalquellen (G1 bis Gx) gültige vereinheitlichte elektronische Programmzeitschrift mit Bild-in-Bild Ausgabe von Nutzsignalen unterschiedlicher Nutzsignalquellen (G1 bis Gx) darstellt,
wobei Mittel vorgesehen sind umfassend eine Mischfunktion für Nutzdatensignale, so dass ein erstes gewähltes Nutzdatensignal als bewegtes Hintergrundbild der vereinheitlichten elektronischen Programmzeitschrift als Live Information über ein Ausgabegerät (TV) ausgebbar ist und zugleich seine Toninformation über das Ausgabegerät (TV) verfügbar ist und dass gleichzeitig mindestens ein in der vereinheitlichten elektronischen Programmzeitschrift angezeigtes weiteres Nutzdatensignal insbesondere einer anderen Nutzsignalquelle, also insbesondere eines Satelliten-Empfängers, eines Kabel-Empfängers oder eines terrestrischen Empfängers, ebenfalls live als bewegtes Bild-im-Bild ohne Tonsignal in der vereinheitlichten elektronischen Programmzeitschrift vorhanden ist.

7. Vorrichtung nach einem der Patentansprüche 1 bis 6,
**dadurch gekennzeichnet,**
**dass** die individuellen Funktionsmerkmale (F(G1) bis F(Gx)) jeweilige Listen von aufgezeichneten Audio-/Video-Daten darstellen und das vereinheitlichte Funktionsmerkmal (F(G*)) eine für alle Nutzsignalquellen (G1 bis Gx) gültige vereinheitlichte Audio-/Video-Datenliste darstellt.

8. Vorrichtung nach Patentanspruch 7,
**dadurch gekennzeichnet,**
**dass** die Audio-/Video-Datenliste strukturiert ist in Form von Verzeichnissen.

9. Vorrichtung nach Patentanspruch 7 oder 8,
**dadurch gekennzeichnet,**
**dass** das mindestens eine vereinheitlichte Funktionsmerkmal (F(G*) eine für alle Nutzsignalquellen (G1 bis Gx) gültige vereinheitlichte Audio-/Video-Datenliste mit Bild-in-Bild Ausgabe von Inhalten der aufgezeichneten Audio-/Video-Daten darstellt.

10. Vorrichtung nach einem der Patentansprüche 2 bis 9,
**dadurch gekennzeichnet,**
**dass** das Ansteuerteil (Client 2) eine Ausgabeeinheit (TV) zur Realisierung einer Bild-im-Bild-Funktionalität in Abhängigkeit vom mindestens einen vereinheitlichten Funktionsmerkmal (F(G*)) ansteuert.

11. Vorrichtung nach einem der Patentansprüche 1 bis 9,
**dadurch gekennzeichnet,**
**dass** die Funktionsmerkmals-Ermittlungseinheit (2) eine Verbindung zu einem Steuersignal-Generator (S3) in einem Netzwerk (N) herstellt und hierbei eine Steuerung der Nutzsignalquellen (G1 bis Gx) durch Steuersignale ermöglicht.

12. Vorrichtung nach einem der Patentansprüche 1 bis 11,
**dadurch gekennzeichnet,**
**dass** bei einer Mehrzahl von gleichen individuellen Funktionsmerkmalen (F(G1) bis F(Gx)) ein individuelles Funktionsmerkmal mit einer höchsten Qualität ausgewählt wird.

13. Verfahren zur vereinheitlichten Bedienung einer Vielzahl von Nutzsignalquellen (G1 bis Gx) mit den Schritten:
Bereitstellen von Konfigurationsdaten (K1 bis Kx), die Informationen hinsichtlich einer Verschaltung der Vielzahl von Nutzsignalquellen (G1 bis Gx) innerhalb einer Unterhaltungselektronik-Umgebung enthalten;
Ermitteln von individuellen Funktionsmerkmalen (F(G1) bis F(Gx)) der Nutzsignalquellen in Abhängigkeit von den Konfigurationsdaten (K1 bis Kx); und
Aufbereiten der ermittelten Funktionsmerkmale (F(G1) bis F(Gx)) zum Erzeugen mindestens eines vereinheitlichten Funktionsmerkmals (F(G*)) für die Gesamtheit der Nutzsignalquellen (G1 bis Gx),
wobei beim Erzeugen des mindestens einen vereinheitlichten Funktionsmerkmals (F(G*)) eine Gewichtung von ermittelten gleichen individuellen Funktionsmerkmalen (F(G1) bis F(Gx)) durchgeführt wird,
wobei durch die Gewichtung Qualitätsunterschiede der jeweiligen Nutzsignalquellen (G1 bis Gx) berücksichtigt werden, und
wobei, falls ein Nutzdatensignal von mehreren Nutzsignalquellen (G1 bis Gx) unterschiedlicher Technologie zugleich angeboten wird, über mitlaufend verfügbare Qualitätskriterien und Auswertung einer zeitlichen Verzögerung des Nutzdatensignals eine mitlaufende Bewertung erfolgt und eine dynamische Auswahl und Zuordnung einer bestens geeigneten Nutzsignalquelle aus der Mehrzahl der Nutzsignalquellen (G1 bis Gx) unterschiedlicher Technologie durchgeführt wird.

14. Verfahren nach Patentanspruch 13,
**dadurch gekennzeichnet,**
**dass** zum Ermitteln der individuellen Funktionsmerkmale (F(G1) bis F(Gx)) die Nutzsignalquellen (G1 bis Gx) in Abhängigkeit von den Konfigurationsdaten (K1 bis Kx) angesteuert werden und hierbei mindestens eines der individuellen Funktionsmerkmale ((F(G1) bis F(Gx)) abgerufen wird.

15. Verfahren nach Patentanspruch 13 oder 14,
**dadurch gekennzeichnet,**
**dass** zum Ermitteln der individuellen Funktionsmerkmale (F(G1) bis F(Gx)) eine Verbindung zu einem Funktionsmerkmalsspeicher (S2) in einem Netzwerk (N) hergestellt wird und hierbei mindestens eines der individuellen Funktionsmerkmale ((F(G1) bis F(Gx)) abgerufen wird.

16. Verfahren nach einem der Patentansprüche 13 bis 15,
**dadurch gekennzeichnet,**
**dass** die individuellen Funktionsmerkmale (F(G1) bis F(Gx)) jeweilige elektronische Programmzeitschriften (EPG1 bis EPGx) darstellen und das mindestens eine vereinheitlichte Funktionsmerkmal (F(G*)) eine für alle Nutzsignalquellen (G1 bis Gx) gültige vereinheitlichte elektronische Programmzeitschrift darstellt.

17. Verfahren nach Patentanspruch 16,
**dadurch gekennzeichnet,**
**dass** das mindestens eine vereinheitlichte Funktionsmerkmal (F(G*)) eine für alle Nutzsignalquellen (G1 bis Gx) gültige vereinheitlichte elektronische Programmzeitschrift mit Bild-in-Bild Ausgabe von Nutzsignalen unterschiedlicher Nutzsignalquellen (G1 bis Gx) darstellt,
wobei ein erstes gewähltes Nutzdatensignal als bewegtes Hintergrundbild der vereinheitlichten elektronischen Programmzeitschrift als Live Information über ein Ausgabegerät (TV) ausgegeben wird und zugleich seine Toninformation über das Ausgabegerät (TV) zur Verfügung steht und wobei gleichzeitig mindestens ein in der vereinheitlichten elektronischen Programmzeitschrift angezeigtes weiteres Nutzdatensignal insbesondere einer anderen Nutzsignalquelle, also insbesondere eines Satelliten-Empfängers, eines Kabel-Empfängers oder eines terrestrischen Empfängers, ebenfalls live als bewegtes Bild-im-Bild ohne Tonsignal in der vereinheitlichten elektronischen Programmzeitschrift vorhanden ist.

18. Verfahren nach einem der Patentansprüche 13 bis 17,
**dadurch gekennzeichnet,**
**dass** die individuellen Funktionsmerkmale (F(G1) bis F(Gx)) jeweils Listen von aufgezeichneten Audio-/Video-Daten (Moviel bis Moviex) darstellen und das vereinheitlichte Funktionsmerkmal (F(G*)) eine für alle Nutzsignalquellen (G1 bis Gx) gültige vereinheitlichte Audio-/Video-Datenliste darstellt.

19. Verfahren nach Patentanspruch 18,
**dadurch gekennzeichnet,**
**dass** das mindestens eine vereinheitlichte Funktionsmerkmal (F(G*) eine für alle Nutzsignalquellen (G1 bis Gx) gültige vereinheitlichte Audio-/Video-Datenliste mit Bild-in-Bild Ausgabe von Inhalten der aufgezeichneten Audio-/Video-Daten darstellt.

20. Verfahren nach einem der Patentansprüche 13 bis 19,
**gekennzeichnet durch**
den weiteren Schritt Herstellen einer Verbindung zu einem Steuersignal-Generator (S3) in einem Netzwerk (N) zum Ermöglichen einer Steuerung der Nutzsignalquellen (G1 bis Gx) durch davon ausgegebene Steuersignale.

21. Verfahren nach Patentanspruch 20,
**dadurch gekennzeichnet,**
**dass** die Steuersignale kanalspezifische Signale darstellen zur Kennzeichnung von Beginn und Ende einer Sendung eines Programmkanals.

22. Verfahren nach einem der Patentansprüche 13 bis 21,
**dadurch gekennzeichnet,**
**dass** bei einer Mehrzahl von gleichen individuellen Funktionsmerkmalen (F(G1) bis F(Gx)) ein Funktionsmerkmal mit einer höchsten Qualität ausgewählt wird.

## Claims

1. Apparatus for standardized operation of a multiplicity of useful signal sources (G1 to Gx) having:
a functional feature conditioning unit (3) for conditioning the ascertained functional features (F(G1) to F(Gx)) and for producing at least one standardized functional feature (F(G*)) for the entirety of the useful signal sources (G1 to Gx),
**characterized by**
a memory unit for storing configuration data (K1 to Kx) that include information regarding an interconnection of the multiplicity of useful signal sources (G1 to Gx) within a consumer electronics environment;
a functional feature ascertainment unit (2) for ascertaining individual functional features (F(G1) to F(Gx)) of the useful signal sources on the basis of the configuration data (K1 to Kx),
wherein the functional feature conditioning unit (3) produces the at least one standardized functional feature (F(G*)) by performing weighting for ascertained identical individual functional features (F(G1) to F(Gx)),
wherein the weighting takes into consideration quality differences of the respective useful signal sources (G1 to Gx), and
wherein means are provided so that if a useful data signal is provided by multiple useful signal sources (G1 to Gx) having different technology at the same time, concomitantly available quality criteria and evaluation of a time delay in the useful data signal are used to make a concomitant assessment, and dynamic selection and association of a very well suited useful signal source from the plurality of useful signal sources (G1 to Gx) having different technology is performed.

2. Apparatus according to Patent Claim 1,
**characterized**
**in that** the functional feature ascertainment unit (2) has an actuating part (client 2) that actuates the useful signal sources (G1 to Gx) on the basis of the configuration data (K1 to Kx) and in so doing retrieves individual functional features (F(G1) to F(Gx).

3. Apparatus according to Patent Claim 1 or 2,
**characterized**
**in that** the functional feature ascertainment unit (2) sets up a connection to a functional feature memory (S2) in a network (N) and in so doing retrieves at least one of the individual functional features (F(G1) to F(Gx)).

4. Apparatus according to either of Patent Claims 2 and 3,
**characterized**
**in that** the actuating part (client 2) is provided in an external device (FB; PDA) and actuates the useful signal sources (G1 to Gx) via an infrared interface (IR) or a radio interface (BLUETOOTH/WLAN).

5. Apparatus according to one of Patent Claims 1 to 4,
**characterized**
**in that** the individual functional features (F(G1) to F(Gx)) are respective electronic program guides (EPG1 to EPGx) of the useful signal sources (G1 to Gx) and the standardized functional feature (F(G*)) is a standardized electronic program guide that is valid for all useful signal sources (G1 to Gx).

6. Apparatus according to Patent Claim 5,
**characterized**
**in that** the at least one standardized functional feature (F(G*)) is a standardized electronic program guide, valid for all useful signal sources (G1 to Gx), with picture-in-picture output of useful signals from different useful signal sources (G1 to Gx), wherein means are provided comprising a mixing function for useful data signals, so that a first selected useful data signal is able to output as a moving background picture from the standardized electronic program guide as live information via an output device (TV) and at the same time its sound information is available via the output device (TV) and so that at the same time at least one further useful data signal displayed in the standardized electronic program guide, particularly from another useful signal source, that is to say particularly from a satellite receiver, a cable receiver or a terrestrial receiver, is likewise present in the standardized electronic program guide live as a moving picture-in-picture without a sound signal.

7. Apparatus according to one of Patent Claims 1 to 6,
**characterized**
**in that** the individual functional features (F(G1) to F(Gx)) are respective lists of recorded audio/video data and the standardized functional feature (F(G*)) is a standardized audio/video data list that is valid for all useful signal sources (G1 to Gx).

8. Apparatus according to Patent Claim 7,
**characterized**
**in that** the audio/video data list is structured in the form of directories.

9. Apparatus according to Patent Claim 7 or 8,
**characterized**
**in that** the at least one standardized functional feature (E(G*)) is a standardized audio/video data list, valid for all useful signal sources (G1 to Gx), with picture-in-picture output of content of the recorded audio/video data.

10. Apparatus according to one of Patent Claims 2 to 9,
**characterized**
**in that** the actuating part (client 2) actuates an output unit (TV) for providing a picture-in-picture functionality on the basis of at least one standardized functional feature (F(G*)).

11. Apparatus according to one of Patent Claims 1 to 9,
**characterized**
**in that** the functional feature ascertainment unit (2) sets up a connection to a control signal generator (S3) in a network (N) and in so doing allows control of the useful signal sources (G1 to Gx) via control signals.

12. Apparatus according to one of Patent Claims 1 to 11,
**characterized**
**in that** when there are a plurality of identical individual functional features (F(G1) to F(Gx)), an individual functional feature having a highest quality is selected.

13. Method for standardized operation of a multiplicity of useful signal sources (G1 to Gx) having the steps of:
provision of configuration data (K1 to Kx) that include information regarding an interconnection of the multiplicity of useful signal sources (G1 to Gx) within a consumer electronics environment;
ascertainment of individual functional features (F(G1) to F(Gx)) of the useful signal sources on the basis of the configuration data (K1 to Kx); and
conditioning of the ascertained functional features (F(G1) to F(Gx)) to produce at least one standardized functional feature (F(G*)) for the entirety of the useful signal sources (G1 to Gx),
wherein during production of the at least one standardized functional feature (F(G*)), weighting of ascertained identical individual functional features (F(G1) to F(Gx)) is performed,
wherein the weighting takes into consideration quality differences of the respective useful signal sources (G1 to Gx), and
wherein if a useful data signal is provided by multiple useful signal sources (G1 to Gx) having different technology at the same time, concomitantly available quality criteria and evaluation of a time delay in the useful data signal are used to make a concomitant assessment, and dynamic selection and association of a very well suited useful signal source from the plurality of useful signal sources (G1 to Gx) having different technology is performed.

14. Method according to Patent Claim 13,
**characterized**
**in that** the individual functional features (F(G1) to F(Gx)) are ascertained by virtue of the useful signal sources (G1 to Gx) being actuated on the basis of the configuration data (K1 to Kx) and, in the process, at least one of the individual functional features (F(G1) to (FGx)) being retrieved.

15. Method according to Patent Claim 13 or 14,
**characterized**
**in that** the individual functional features (F(G1) to F(Gx)) are ascertained by virtue of a connection to a functional feature memory (S2) in a network (N) being set up and, in the process, at least one of the individual functional features (F(G1) to (F(Gx)) being retrieved.

16. Method according to one of Patent Claims 13 to 15,
**characterized**
**in that** the individual functional features (F(G1) to F(Gx)) are respective electronic program guides (EPG1 to EPGx) and the at least one standardized functional feature (F(G*)) is a standardized electronic program guide that is valid for all useful signal sources (G1 to Gx).

17. Method according to Patent Claim 16,
**characterized**
**in that** the at least one standardized functional feature (F(G*)) is a standardized electronic program guide, valid for all useful signal sources (G1 to Gx), with picture-in-picture output of useful signals from different useful signal sources (G1 to Gx), wherein a first selected useful data signal is output as a moving background picture from the standardized electronic program guide as live information via an output device (TV) and at the same time its sound information is available via the output device (TV) and wherein at the same time at least one further useful data signal displayed in the standardized electronic program guide, particularly from another useful signal source, that is to say particularly from a satellite receiver, a cable receiver or a terrestrial receiver, is likewise present in the standardized electronic program guide live as a moving picture-in-picture without a sound signal.

18. Method according to one of Patent Claims 13 to 17,
**characterized**
**in that** the individual functional features (F(G1) to F(Gx)) are respective lists of recorded audio/video data (movie 1 to moviex) and the standardized functional feature (F(G*)) is a standardized audio/video data list that is valid for all useful signal sources (G1 to Gx).

19. Method according to Patent Claim 18,
**characterized**
**in that** the at least one standardized functional feature (F(G*)) is a standardized audio/video data list, valid for all useful signal sources (G1 to Gx), with picture-in-picture output of content of the recorded audio/video data.

20. Method according to one of Patent Claims 13 to 19,
**characterized by**
the further step of set-up of a connection to a control signal generator (S3) in a network (N) to allow control of the useful signal sources (G1 to Gx) by control signals that are output thereby.

21. Method according to Patent Claim 20,
**characterized**
**in that** the control signals are channel-specific signals for identifying the start and end of a transmission of a program channel.

22. Method according to one of Patent Claims 13 to 21,
**characterized**
**in that** when there are a plurality of identical individual functional features (F(G1) to F(Gx)), a functional feature having a highest quality is selected.

## Revendications

1. Dispositif pour la manipulation unifiée d'une pluralité de sources de signaux utiles (G1 à Gx) avec :
une unité de traitement de caractéristiques fonctionnelles (3) pour traiter les caractéristiques fonctionnelles déterminées (F(G1) à F(Gx)) et pour générer au moins une caractéristique fonctionnelle unifiée (F(G*)) pour l'ensemble des sources de signaux utiles (G1 à Gx),
**caractérisé par**
une unité de mémoire pour stocker des données de configuration (K1 à Kx) contenant des informations relatives à une connexion de la pluralité de sources de signaux utiles (G1 à Gx) dans un environnement électronique grand public,
une unité de détermination de caractéristiques fonctionnelles (2) pour déterminer des caractéristiques fonctionnelles individuelles (F(G1) à F(Gx)) des sources de signaux utiles en fonction des données de configuration (K1 à Kx),
l'unité de traitement de caractéristiques fonctionnelles (3) destinée à générer l'au moins une caractéristique fonctionnelle unifiée (F(G*)) effectuant une pondération de mêmes caractéristiques fonctionnelles individuelles déterminées (F(G1) à F(Gx)),
la pondération permettant de tenir compte de différences qualitatives des sources de signaux utiles respectives (G1 à Gx) et
des moyens étant prévus, de telle sorte que, si un signal de données utiles est offert simultanément par plusieurs sources de signaux utiles (G1 à Gx) de technologie différente, une évaluation parallèle est effectuée par l'intermédiaire de critères qualitatifs disponibles parallèlement et d'une évaluation d'un retard temporel du signal de données utiles et une sélection et affectation dynamiques d'une source de signaux utiles parfaitement appropriée sont effectuées parmi la pluralité des sources de signaux utiles (G1 à Gx) de technologie différente.

2. Dispositif selon la revendication 1, **caractérisé en ce que** l'unité de détermination de caractéristiques fonctionnelles (2) comporte une unité de commande (Client 2) qui commande les sources de signaux utiles (G1 à Gx) en fonction des données de configuration (K1 à Kx) tout en consultant des caractéristiques fonctionnelles individuelles (F(G1) à F(Gx)).

3. Dispositif selon la revendication 1 ou 2, **caractérisé en ce que** l'unité de détermination de caractéristiques fonctionnelles (2) établit une liaison avec une mémoire de caractéristiques fonctionnelles (S2) dans un réseau (N) tout en consultant au moins l'une des caractéristiques fonctionnelles individuelles (F(G1) à F(Gx)).

4. Dispositif selon l'une des revendications 2 à 3, **caractérisé en ce que** l'unité de commande (Client 2) est réalisée dans un appareil externe (FB ; PDA) et commande les sources de signaux utiles (G1 à Gx) via une interface infrarouge (IR) ou une interface radio (Bluetooth/WLAN).

5. Dispositif selon l'une des revendications l à 4, **caractérisé en ce que** les caractéristiques fonctionnelles individuelles (F(G1) à F(Gx)) représentent des guides des programmes électroniques respectifs (EPG1 à EPGx) des sources de signaux utiles (G1 à Gx) et la caractéristique fonctionnelle unifiée (F(G*)) représente un guide des programmes électronique unifié valable pour toutes les sources de signaux utiles (G1 à Gx).

6. Dispositif selon la revendication 5, **caractérisé en ce que** l'au moins une caractéristique fonctionnelle unifiée (F(G*)) représente un guide des programmes électronique unifié valable pour toutes les sources de signaux utiles (G1 à Gx) avec émission de type image dans l'image de signaux utiles de différentes sources de signaux utiles (G1 à Gx),
des moyens étant prévus, comprenant une fonction mixte pour signaux de données utiles, de sorte qu'un premier signal de données utiles sélectionné peut être émis en tant qu'image de fond animée du guide des programmes électronique unifié en tant qu'information en direct via un appareil de sortie (TV), son information sonore étant en même temps disponible via l'appareil de sortie (TV), et qu'en même temps au moins un autre signal de données utiles affiché dans le guide des programmes électronique unifié, et plus particulièrement d'une autre source de signaux utiles, c'est-à-dire, notamment, un récepteur satellite, un récepteur câblé ou un récepteur terrestre, est présent, également en direct, en tant qu'image dans l'image animée sans signal sonore dans le guide des programmes électronique unifié.

7. Dispositif selon l'une des revendications 1 à 6, **caractérisé en ce que** les caractéristiques fonctionnelles individuelles (F(G1) à F(Gx)) représentent des listes respectives de données audio / vidéo enregistrée et **en ce que** la caractéristique fonctionnelle unifiée (F(G*)) représente une liste de données audio / vidéo unifiée valable pour toutes les sources de signaux utiles (G1 à Gx).

8. Dispositif selon la revendication 7, **caractérisé en ce que** la liste de données audio / vidéo est structurée sous forme de répertoires.

9. Dispositif selon la revendication 7 ou 8, **caractérisé en ce que** l'au moins une caractéristique fonctionnelle unifiée (F(G*) représente une liste de données audio / vidéo unifiée valable pour toutes les sources de signaux utiles (G1 à Gx) avec émission de type image dans l'image de contenus des données audio / vidéo enregistrées.

10. Dispositif selon l'une des revendications 2 à 9, **caractérisé en ce que** l'unité de commande (Client 2) commande une unité de sortie (TV) pour réaliser une fonctionnalité de type image dans l'image en fonction d'au moins une caractéristique fonctionnelle unifiée (F(G*)).

11. Dispositif selon l'une des revendications l à 9, **caractérisé en ce que** l'unité de détermination de caractéristiques fonctionnelles (2) établit une liaison avec un générateur de signal de commande (S3) dans un réseau (N), permettant ainsi une commande des sources de signaux utiles (G1 à Gx) par des signaux de commande.

12. Dispositif selon l'une des revendications l à 11, **caractérisé en ce que**, étant donné une pluralité de mêmes caractéristiques fonctionnelles individuelles (F(G1) à F(Gx)), une caractéristique fonctionnelle individuelle de qualité maximale est sélectionnée.

13. Procédé pour la manipulation unifiée d'une pluralité de sources de signaux utiles (G1 à Gx), comportant les étapes :
mise à disposition de données de configuration (K1 à Kx) qui contiennent des informations relatives à une connexion de la pluralité de sources de signaux utiles (G1 à Gx) dans un environnement électronique grand public ;
détermination de caractéristiques fonctionnelles individuelles (F(G1) à F(Gx)) des sources de signaux utiles en fonction des données de configuration (K1 à Kx) et
traitement des caractéristiques fonctionnelles déterminées (F(G1) à F(Gx)) pour générer au moins une caractéristique fonctionnelle unifiée (F(G*)) pour l'ensemble des sources de signaux utiles (G1 à Gx),
une pondération de mêmes caractéristiques fonctionnelles individuelles déterminées (F(G1) à F(Gx)) étant effectuée lors de la génération de l'au moins une caractéristique fonctionnelle unifiée (F(G*)),
des différences qualitatives des sources de signaux utiles respectives (G1 à Gx) étant prises en compte par la pondération et
si un signal de données utiles est offert simultanément par plusieurs sources de signaux utiles (G1 à Gx) de technologie différente, il y a évaluation parallèle par l'intermédiaire de critères qualitatifs disponibles parallèlement et d'une évaluation d'un retard temporel du signal de données utiles et une sélection et affectation dynamiques d'une source de signaux utiles parfaitement appropriée sont effectuées parmi la pluralité des sources de signaux utiles (G1 à Gx) de technologie différente.

14. Procédé selon la revendication 13, **caractérisé en ce que**, pour déterminer les caractéristiques fonctionnelles individuelles (F(G1) à F(Gx)), les sources de signaux utiles (G1 à Gx) sont commandées en fonction des données de configuration (K1 à Kx), au moins l'une des caractéristiques fonctionnelles individuelles ((F(G1) à F(Gx)) étant consultée.

15. Procédé selon la revendication 13 ou 14, **caractérisé en ce que**, pour déterminer les caractéristiques fonctionnelles individuelles (F(G1) à F(Gx)), une liaison avec une mémoire de caractéristiques fonctionnelles (S2) est établie dans un réseau (N), au moins l'une des caractéristiques fonctionnelles individuelles ((F(G1) à F(Gx)) étant consultée.

16. Procédé selon l'une des revendications 13 à 15, **caractérisé en ce que** les caractéristiques fonctionnelles individuelles (F(G1) à F(Gx)) représentent des guides des programmes électroniques respectifs (EPG1 à EPGx) et **en ce que** l'au moins une caractéristique fonctionnelle unifiée (F(G*)) représente un guide des programmes électronique unifié valable pour toutes les sources de signaux utiles (G1 à Gx).

17. Procédé selon la revendication 16, **caractérisé en ce que** l'au moins une caractéristique fonctionnelle unifiée (F(G*)) représente un guide des programmes électronique unifié valable pour toutes les sources de signaux utiles (G1 à Gx) avec émission de type image dans l'image de signaux utiles de différentes sources de signaux utiles (G1 à Gx),
un premier signal de données utiles sélectionné étant émis en tant qu'image de fond animée du guide des programmes électronique unifié en tant qu'information en direct via un appareil de sortie (TV), son information sonore étant en même temps disponible via l'appareil de sortie (TV),
en même temps au moins un autre signal de données utiles affiché dans le guide des programmes électronique unifié, et plus particulièrement d'une autre source de signaux utiles, c'est-à-dire, notamment, un récepteur satellite, un récepteur câblé ou un récepteur terrestre, étant présent, également en direct, en tant qu'image dans l'image animée sans signal sonore dans le guide des programmes électronique unifié.

18. Procédé selon l'une des revendications 13 à 17, **caractérisé en ce que** les caractéristiques fonctionnelles individuelles (F(G1) à F(Gx)) représentent respectivement des listes de données audio / vidéo enregistrées (Movie1 à Movie x) et **en ce que** la caractéristique fonctionnelle unifiée (F(G*)) représente une liste de données audio / vidéo unifiée valable pour toutes les sources de signaux utiles (G1 à Gx).

19. Procédé selon la revendication 18, **caractérisé en ce que** l'au moins une caractéristique fonctionnelle unifiée (F(G*) représente une liste de données audio / vidéo unifiée valable pour toutes les sources de signaux utiles (G1 à Gx) avec émission de type image dans l'image de contenus des données audio / vidéo enregistrées.

20. Procédé selon l'une des revendications 13 à 19, **caractérisé par** l'étape supplémentaire d'établissement d'une liaison avec un générateur de signal de commande (S3) dans un réseau (N) pour permettre une commande des sources de signaux utiles (G1 à Gx) par des signaux de commande émis par celles-ci.

21. Procédé selon la revendication 20, **caractérisé en ce que** les signaux de commande sont des signaux spécifiques à une chaîne pour marquer le début et la fin d'une émission d'une chaîne de programme.

22. Procédé selon l'une des revendications 13 à 21, **caractérisé en ce que**, étant donné une pluralité de mêmes caractéristiques fonctionnelles individuelles (F(G1) à F(Gx)), une caractéristique fonctionnelle individuelle de qualité maximale est sélectionnée.
